(19) Europäisches Patentamt
European Patent Office
Office européen des brevets

(11) **EP 4 322 070 A1**

(12) **EUROPEAN PATENT APPLICATION**

(43) Date of publication:
**14.02.2024 Bulletin 2024/07**

(21) Application number: **23190045.7**

(22) Date of filing: **07.08.2023**

(51) International Patent Classification (IPC):
**G06N 10/20** *(2022.01)* **G06N 10/70** *(2022.01)*

(52) Cooperative Patent Classification (CPC):
**G06N 10/70; G06N 10/20;** G06N 7/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 US 202263395962 P**

(71) Applicant: **QEDMA Quantum Computing**
**6902068 Tel-Aviv (IL)**

(72) Inventors:
• **AHARONOV, Dorit**
**Jerusalem (IL)**
• **LINDNER, Netanel Hanan**
**3783500 Aviel (IL)**
• **ZUBIDA, Assaf**
**Ramat Gan (IL)**
• **OVDAT, Omrie**
**4281500 Pardesia (IL)**

• **BERMAN, Adiel Reuvan Meyer**
**6250710 Tel-Aviv (IL)**
• **ALBERTON, Ori**
**Tel-Aviv (IL)**
• **BAIREY, Eyal**
**Tel-Aviv (IL)**
• **GOLAN, Omri**
**Rehovot (IL)**
• **GOLAN, Or**
**Herzeliya (IL)**
• **HABER, Avraham Eliyahu**
**Petah Tikva (IL)**
• **ITKIN, Yaron**
**Tel-Aviv (IL)**
• **KENNETH, Oded**
**6230231 Tel-Aviv (FR)**
• **LIFSHITZ, Yotam Yona**
**Shimshit (IL)**

(74) Representative: **Lavoix**
**Bayerstraße 83**
**80335 München (DE)**

(54) **METHODS AND SYSTEMS FOR PATCH-BY-PATCH CHARACTERIZATION OF QUANTUM PROCESSORS**

(57) The present disclosure provides a method for characterizing a quantum processor including a plurality of qubits. The method comprising applying a characterization protocol to a qubit patch including a subset of qubits. The characterization protocol includes the reduction of 'patching errors' - systematic characterization errors occurring due to interactions between qubits inside the patch and qubits outside the patch.

**Fig. 7A**

EP 4 322 070 A1

## Description

## TECHNOLOGICAL FIELD

The present disclosure relates to the field of quantum computing, specifically to the field of quantum processor characterization.

## BACKGROUND

The development of useful quantum computers relies crucially on the reduction of implementation errors - differences between the actual and ideal implementations of quantum logic operations. The long-term strategy for dealing with such errors is quantum error correction, which, however, requires very low error rates to begin with, as well as an excessive overhead in the number of qubits, relative to existing hardware. Complementary strategies, suited for dealing with errors in small circuits on existing hardware, are collectively termed quantum error suppression and mitigation. Both the improvement of hardware to meet the conditions for error correction, and the majority of error suppression and mitigation protocols, require a detailed and high-resolution characterization of implementation errors. Though the characterization of implementation errors in single qubits or qubit pairs is common practice, it is widely understood as computationally intractable for more than just a few qubits - unless various simplifying and often un-realistic assumptions are made. This state of affairs prevents the detailed and high-resolution characterization of state-of-the-art quantum processors, currently numbering tens to hundreds of qubits.

As an example, given a Markovian model for implementation errors to be characterized, the most detailed characterization protocol known to date is termed gate set tomography (GST) as described for example in Nielsen et al. "Gate Set Tomography" Quantum 5, 557 (2021), which is hereby incorporated by reference. Here 'gate set' corresponds to a set of quantum logic operations, generally including quantum states, gates and measurements, which are characterized simultaneously, relative to one another. High resolution is achieved in GST by using long periodic sequences of gates, such that the estimation error scales as the inverse of the sequence length. The flexibility in choosing the implementation errors to be characterized, and the fact that gates, states and measurements are all being characterized, means that GST can be viewed as generalizing and unifying various pre-existing protocols, such as state, measurement, process and Hamiltonian tomography. But the detailed output of GST naturally makes it resource extensive, in terms of both quantum and classical run times, as well as classical memory. As a result, the open-source implementation of GST, which is arguably the industry standard for detailed characterization, currently only supports single- or two-qubit GST as a standard use case, see Nielsen et al. "Probing quantum processor performance with pyGSTi," Quantum Science and Technology 5, 044002 (2020).

A common approach to bypass the computational barrier of many-qubit characterization is to characterize a small patch (i.e. a small subset) of qubits in a large device, simply ignoring all qubits outside the patch. As an example, all published experimental uses of GST to date have used either single- or two-qubit patches. The above approach is also utilized by fast GST-like characterization protocols, including the single-qubit 'robust phase estimation' and variations thereof, Kimmel et al. "Robust calibration of a universal single-qubit gate set via robust phase estimation" Phys. Rev. A 92, 06235 (2015) and Landa et al. "Experimental Bayesian estimation of quantum state preparation, measurement, and gate errors in multi-qubit devices" Phys. Rev. Research4, 013199 (2022), and the two-qubit 'Floquet calibration', Arute et al. "Observation of separated dynamics of charge and spin in the Fermi-Hubbard model" arXiv:2010.07965 (2020), and 'Hamiltonian error amplifying tomography', Sundaresan et al. "Reducing Unitary and Spectator Errors in Cross Resonance with Optimized Rotary Echoes" PRX Quantum 1, 020318 (2020). Similarly, most randomized characterization protocols are commonly applied to single- or two-qubit patches. However, gates intended to act within a particular patch also act unintentionally on additional, typically neighboring, qubits. This important phenomenon is known as cross-talk, and such cross-talk errors between the patch and its neighborhood cannot be captured by single-patch characterization protocols.

## GENERAL DESCRIPTION

The Applicant has found that cross-talk between the characterized patch and its neighborhood leads to systematic estimation errors of implementation errors occurring *within* the patch, essentially since qubits out of the patch play the role of an unmodeled environment. Such systematic errors are herein referred to as *patching errors.* It has been found that patching errors are, in many realistic scenarios, a limiting factor in the performance of single-patch characterization protocols, as well as more general patch-based characterization protocols utilizing data from multiple patches.

Patch-based characterization protocols suffer systematic patching errors, as defined above. The present disclosure provides a method for overcoming this difficulty, enabling an efficient, detailed and high-resolution characterization of implementation errors in single patches, which is not limited by patching errors. As a result, the characterizations of multiple patches can be combined into a reliable full device characterization. The method involves novel complementary 'neighboring gate sequences' acting on neighboring qubits in addition to standard 'characterization gate sequences' in a given patch. While the characterization gate sequences are devised to produce measurement outcomes which are sensitive to implementation errors in the patch, the neighboring gate sequences are chosen to decrease patching errors, by reducing sensitivity to implementation errors involving qubits outside the patch (i.e. cross-talk). This results in single-patch and full-device estimates carrying small patching errors, which are demonstrated to be below statistical errors in practical regimes of interest.

In general, the characterization method disclosed herein may be usable for ranking a plurality of quantum processors based on the fitted model parameters (e.g. by computing a distance measure such as fidelity or diamond distance between ideal and actual implementations of at least some or each quantum operation). In other embodiments, the characterization method may be usable for providing optimal control over the quantum processor by modifying how pulses implement the quantum logic operations on the quantum processor based on the fitted model parameters. In some embodiments, the characterization method may be usable for providing error suppression and mitigation by recompiling a quantum algorithm based on the fitted model parameters. For example, the recompiling may be performed to minimize the use of the noisiest gates. Quantum algorithms and their applications are generally described in the literature (see e.g. www.quantumalgorithmzoo.org). For example, the quantum algorithm may be a factoring algorithm to find a prime factorization of an n-bit integer for use in cryptography.

In accordance with a first aspect of the presently disclosed subject matter, there is provided a computer implemented method, for characterizing implementation errors in a set of quantum logic operations of a quantum processor. The set of quantum operations is acting on a subset of qubits, the subset of qubits is defining a qubit patch. The implementation errors involve the qubit patch and are modeled by a model. The model includes a plurality of model parameters. The method comprises applying a set of quantum circuits to the quantum processor, wherein at least some of the quantum circuits comprise a characterization gate sequence and a neighboring gate sequence. The characterization gate sequence is applicable to the qubit patch and is configured to provide measurement outcomes that are sensitive to at least some of the model's parameters. That is, a small change in said model parameters leads to a large change in (the probability distribution of) measurement outcomes obtained after applying a characterization sequence. The neighboring gate sequence is applicable to at least some neighboring qubits that are outside the patch and interacting with the qubit patch. The neighboring gate sequence is configured to reduce the sensitivity of measurement outcomes to implementation errors involving environment qubits outside the qubit patch. The method further comprises: measuring the patch qubits using a measurement apparatus of the quantum processor; repeating the aforementioned actions of application of a quantum circuit and of measurement, to collect a set of frequencies, where the frequencies are associated with a measurement outcome and a quantum circuit; computing a value of the model parameters by fitting the model to the set of frequencies.

In addition to the above features, a computer implemented method, for characterizing implementation errors in a set of quantum logic operations of a quantum processor, according to this aspect of the presently disclosed subject matter can optionally comprise one or more of features (i) to (xxxiv) below, in any technically possible combination or permutation:

i. the neighboring qubits comprise qubits interacting with the qubit patch based on an interaction hypergraph.

ii. the interaction hypergraph describes subsets of multiple qubits in the quantum processor interacting via multi-qubit implementation errors.

iii. the hypergraph describes subsets of multiple qubits in the quantum processor on which native multi-qubit gates can be applied.

iv. the characterization gate sequence is a gate set tomography sequence.

v. the set of quantum logic operations includes initialization and measurement.

vi. the gates in said set of quantum logic operations are configured to operate on single qubits or pairs of qubits.

vii. measuring patch qubits is performed by measuring all qubits in the quantum processor and further comprising computing reduced frequencies from the set of frequencies to aggregate outcomes with same patch qubits measurement outcomes.

viii. the neighboring gate sequence is configured to reduce a patching error.

ix. the patching error is estimated using perturbation expansion and the neighboring gate sequences are configured to cancel or at least reduce the leading orders in said perturbation expansion.

x. the leading orders in the perturbation expansion include perturbation expansion orders up to a given order.

xi. the leading orders in the perturbation expansion are up to the second order.

xii. the neighboring gate sequence comprises initializing the environment qubits in a state configured to cancel or at least reduce leading orders in said perturbation expansion.

xiii. the neighboring gate sequence comprises initializing the environment qubits in a neighborhood-mixed state, the neighborhood-mixed state being defined as a state wherein the reduced density operator of each neighboring qubit is proportional to the unit-operator. In some embodiments, the neighborhood-mixed state may not be the maximally mixed state (i.e. the state where the density operator of all environment qubits is proportional the unit-operator).

xiv. the neighborhood-mixed state is an even mixture $(|0\rangle^{\otimes n} + |1\rangle^{\otimes n})/2 \otimes |0\rangle^{\otimes(m-n)}$, wherein m and $n$ are the numbers of environment and neighboring qubits, respectively.

xv. the set of quantum circuits consists of quantum circuit clusters, each quantum circuit cluster comprising a plurality of quantum circuits having a same characterization gate sequence and a distinct neighboring gate sequence, the method further comprising combining frequencies collected on quantum circuits of the same cluster.

xvi. the set of quantum circuits comprises quantum circuit clusters each consisting of two quantum circuits having a same characterization gate sequence and respectively a first neighboring gate sequence starting with an idle gate and a second neighboring gate sequence starting with a $\pi$ rotation, both first and second neighboring gate sequences being applied to each neighboring qubit, and wherein the method further comprises averaging frequencies collected on the two quantum circuits of each quantum circuit cluster.

xvii. at least one of the quantum circuits further comprises a context gate sequence applicable to one or more environment qubits outside the qubit patch, wherein context gates of said context gate sequence are applied synchronously to at least some characterization gates of the characterization gate sequence of said at least one quantum circuit.

xviii. the neighboring gate sequence and the context gate sequence are temporally intertwined.

xix. the neighboring gate sequence of at least one of the quantum circuits comprises at least some neighboring gates applied synchronously with at least some characterization gates of the characterization gate sequence of said at least one quantum circuit.

xx. the neighboring gate sequence of at least one of the quantum circuits comprises at least some neighboring gates applied successively to at least some characterization gates of the characterization gate sequence of said at least one quantum circuit.

xxi. some of the context gates are configured to form circuit layers together with the characterization gate sequences.

xxii. at least one of the quantum circuits includes a neighboring gate sequence comprising neighboring gates selected randomly.

xxiii. at least one of the quantum circuits includes a neighboring gate sequence comprising dynamical decoupling sequence configured to reduce patching errors.

xxiv. the dynamical decoupling sequence are configured to reduce patching errors estimated by a perturbative expansion.

xxv. the dynamical decoupling sequences are configured to eliminate leading orders in said perturbation expansion.

xxvi. the leading orders include perturbation expansion orders up to a given order.

xxvii. the leading orders in the perturbation expansion are up to the second order.

xxviii. the dynamical decoupling sequence is coordinated with said characterization gate sequences of said at least one quantum circuit.

xxix. at least some gates of the dynamical decoupling sequence are applied synchronously with at least some gates of the characterization gate sequence of said at least one quantum circuit.

xxx. at least some gates in the dynamical decoupling sequence are applied successively to at least some gates of the characterization gate sequence of said at least one quantum circuit.

xxxi. a qubit patch includes at least 3 qubits.

xxxii. gauge optimization.

xxxiii. the quantum processor is described in terms of qudits in place of qubits.

xxxiv. the gate set to be characterized contains at least one state preparation and measurement operation, or at least one non-idle gate.

In accordance with a second aspect of the presently disclosed subject matter, there is provided a computer implemented method for characterizing a quantum processor. The method comprises successively applying the method according to the first aspect of the presently disclosed subject matter to a plurality of patches of qubits of said quantum processor.

In addition to the above features, a computer implemented method for characterizing a quantum processor according to this aspect of the presently disclosed subject matter can optionally comprise one or more of features (i) to (iv) below, in any technically possible combination or permutation:

i. the plurality of patches are overlapping.

ii. the plurality of patches cover all of the qubits of the quantum processor.

iii. sequences corresponding to different patches, including both characterization and neighboring gate sequences, may be applied in parallel, in order to reduce the overall QPU time.

iv. gauge optimization.

In accordance with a third aspect of the presently disclosed subject matter, there is provided a non-transient computer-readable storage-medium storing computer instructions, wherein the computer instructions are used for causing a computer to execute the method according to the first or second aspects of the presently disclosed subject matter.

In accordance with a fourth aspect of the presently disclosed subject matter, there is provided a computer program product, comprising a computer program, wherein the computer program, when executed by a computer, implements the method according to the first or second aspects of the presently disclosed subject matter.

In accordance with a fifth aspect of the presently disclosed subject matter, there is provided a method for characterizing a quantum processor including a plurality of qubits, the method comprising applying a characterization protocol to a qubit patch including a subset of qubits, wherein the characterization protocol includes reducing a patching error due to interactions between qubits inside the qubit patch and qubits outside the qubit patch.

In addition to the above features, a method for characterizing a quantum processor including a plurality of qubits, according to this aspect of the presently disclosed subject matter can optionally comprise one or more of features (i) to (vi) below, in any technically possible combination or permutation:

> i. successively applying the characterization protocol to a plurality of patches.
> ii. the plurality of patches cover altogether the plurality of qubits of the quantum processor.
> iii. at least some patches of the plurality of patches are overlapping.
> iv. the characterization protocol includes applying neighboring gate sequences to neighboring qubits outside of the qubit patch and interacting with the qubit patch, wherein the neighboring gate sequences are configured to reduce the sensitivity of measurement outcomes to implementation errors involving qubits outside the qubit patch.
> v. the characterization gate sequences in said characterization protocol are configured to provide measurement outcomes which are both sensitive to implementation errors in the patch and have a reduced sensitivity to implementation errors involving qubits outside the patch.
> vi. the quantum processor is described in terms of qudits in place of qubits.

In accordance with a sixth aspect of the presently disclosed subject matter, there is provided a quantum circuit for use in characterizing implementation errors in a set of quantum logic operations of a quantum processor. The set of quantum operations is acting on a subset of qubits, the subset of qubits is defining a qubit patch. The implementation errors involve the qubit patch and are modeled by a model. The model includes a plurality of model parameters. The quantum circuit comprises: a characterization gate sequence applicable to the qubit patch and configured to provide measurement outcomes sensitive to at least some of the model parameters; a neighboring gate sequence applicable to at least some neighboring qubits interacting with the qubit patch, wherein the neighboring gate sequence is configured to reduce a sensitivity of measurement outcomes to implementation errors involving environment qubits outside the qubit patch.

In addition to the above features, a quantum circuit for use in characterizing implementation errors in a set of quantum logic operations of a quantum processor, according to this aspect of the presently disclosed subject matter can optionally comprise one or more of features (i) to (iv) below, in any technically possible combination or permutation:

> i. the characterization gate sequence is a gate set tomography gate sequence.
> ii. the neighboring gate sequence includes initializing the neighboring qubits in a neighborhood-mixed state.
> iii. the neighboring gate sequence includes dynamical decoupling sequences configured to reduce patching errors.
> iv. the neighboring gate sequence includes neighboring gates selected randomly.

In accordance with a seventh aspect of the presently disclosed subject matter, there is provided a system comprising a computer and a quantum processor, the computer having a gate-level access to the quantum processor, the system being configured to perform the method according to the first, second, fifth, or sixth aspects of the presently disclosed subject matter.

In the present disclosure, the following terms and their derivatives may be understood according to the below explanations:

The term "qubit" may refer to a 2-level quantum system.

The term "qudit" may refer to a $M$-level quantum system, with $M \geq 2$. This includes the qubit case $M = 2$, and may include the case $M = \infty$ corresponding to a bosonic mode.

The term 'axis' may refer to a geometrical axis of rotation in the Bloch-sphere, such as the x-axis, representation of a qubit.

The term 'Hamiltonian' may refer to, depending on the context, a Hamiltonian operator or any term thereof, or may refer to having the Hamiltonian property - absence of decoherence.

The term "multi-qubit interaction" may refer to an implementation error involving (m>1) multiple qubits.

The term "quantum logic operation" may refer to any of the following operations applied to a quantum processor:

initialization, measurement, gate application and reset operation. Additionally, it may also refer to pulse application, mid-circuit measurement and/or adaptive measurement.

The term 'model' may refer to a mathematical model for the implementation of a set of quantum logic operations $\mathcal{G}$ in a quantum processor, i.e. a function $\theta \mapsto \mathcal{G}(\theta)$ mapping a plurality of model parameters $\theta$ to a particular implementation $\mathcal{G}(\theta)$.

The term "fitting" may refer to any form of selecting or updating a model based on measurement outcomes obtained from a quantum processor. This includes e.g. the computation of a maximum likelihood point in a given model parameter space, or the Bayesian update of a probability distribution over said parameter space.

Both model and fitting procedure may incorporate machine learning methods, such as artificial neural networks and optimization algorithms used for fitting such models to data.

The term "hypergraph" may refer to a generalization of a graph in which edges can join any number of vertices.

The term "patch" may refer to a subset of qubits in a quantum processor.

The term "patching error" may refer to systematic estimation errors occurring in a characterization protocol applied to a patch in a quantum processor, due to unwanted interactions between the characterized patch and additional qubits in said quantum processor.

The term "environment qubit" may refer to a qubit outside of a qubit patch defined in a characterization method according to the present disclosure.

The term "neighboring qubit" may refer to an environment qubit (i.e. a qubit outside of said patch) interacting with the qubit patch.

The term "gate sequence" may refer to a plurality of gates (i.e. quantum logic operations) applicable to given qubits in a given temporal arrangement. In particular, the term "characterization gate sequence" may refer to a plurality of gates applicable to (patch) qubits in the patch and the term "neighboring gate sequence" may refer to a plurality of gates applicable to (neighboring) qubits outside the qubit patch. In particular, a gate sequence may comprise a successive plurality of bursts of gates in a given temporal arrangement, wherein the gates of each burst are applied directly successively. As will be described herein, a gate sequence (e.g. the neighboring gate sequence) may be composed of a plurality of intertwined gate sequences (e.g. the context gate sequence and the dynamical decoupling gate sequence).

It is understood that the terms "at least one" and "at least some" are used herein to provide a general description of the method. For the sake of brevity, the description is not repeated by interchanging these terms by the term "each". However, an embodiment for which the terms "at least some" and/or "at least one" is replaced by the term "each" or "substantially each" is also herein disclosed.

## BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

**Fig. 1A** illustrates a standard Bloch sphere representation of a two-level-system and key pure states, or kets.

**Fig. 1B** illustrates a density operator representation of a pure state, and a corresponding super-ket representation.

**Fig. 2** illustrates $\pi$ and $\frac{\pi}{2}$ rotations of a quantum state around the x-axis of the Bloch sphere.

**Fig. 3A-3D** illustrates different types of implementation errors in quantum processors.

**Fig. 4** illustrates an error amplification phenomenon.

**Fig. 5A-5B** schematically depict qubits in quantum processors and illustrates patch qubits, neighboring qubits and environment qubits.

**Fig. 6** shows a flowchart illustrating a broad aspect of a method according to embodiments of the present disclosure.

**Fig. 7A** illustrates application of a quantum circuit, comprising a characterization gate sequence and a neighboring gate sequence, according to embodiments of the present disclosure.

**Fig. 7B** illustrates application of a quantum circuit, comprising a context gate sequence, according to embodiments of the present disclosure.

**Fig. 7C** illustrates application of a quantum circuit cluster according to embodiments of the present disclosure.

**Fig. 8** illustrates a flowchart diagram of a method according to embodiments of the present disclosure.

**Fig. 9** illustrates a scaling of a patching error, with and without initial twirl for a simulated quantum processor comprising two qubits.

**Fig. 10** illustrates a ratio of the patching error to the statistical error, with different neighboring-sequence settings for a simulated quantum processor comprising three qubits.

**Fig. 11** schematically illustrates a computer implementing a method according to embodiments of the present disclosure.

**Fig. 12** schematically illustrates a system implementing a method according to embodiments of the present disclosure.

## DETAILED DESCRIPTION OF EMBODIMENTS

*Single-qubit states and rotations*

Standard representations of single-qubit states and the meaning of rotation operations used in the following description are reviewed hereinbelow.

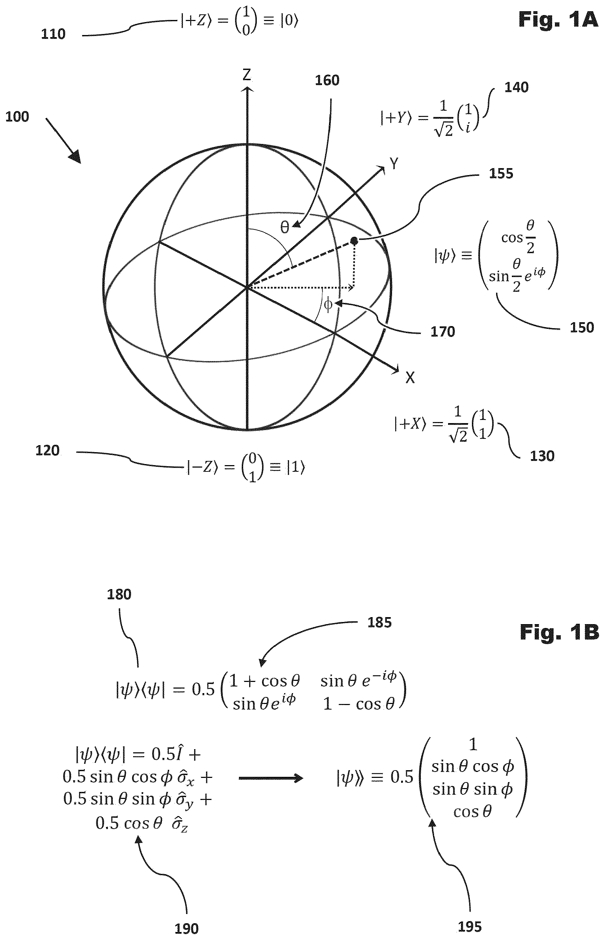

**Fig. 1A** shows the Bloch-sphere **100** representation of a two-level quantum system, i.e. a qubit. Key quantum states are indicated. Any pure state of a qubit may be represented as a point on the surface of the Bloch-sphere. A general pure state **155** is shown, along with its vector representation **150**. The angle parameters correspond to the polar angle $\theta$ **160** and the azimuthal angle $\phi$ **170**. For quantum computation, two antipodal pure states $|0\rangle$ and $|1\rangle$ replace the classical logical states 0 and 1. It is customary to represent the logical-0 state **110** and the logical-1 state **120** as intersection points between the Bloch sphere and the z-axis, corresponding the standard-basis vectors. **Fig. 1A** also shows states corresponding to the intersection of the Bloch sphere with the positive x-axis **130** and y-axis **155**, along with their vector representations.

States which are not pure are termed mixed, and may be represented as points in the interior of the Bloch sphere - the Bloch-ball. In this case, the vector representation is replaced with a density operator representation. In **fig. 1B** the density operator **180** corresponding to the state **150** is shown, along with an explicit matrix expression **185**. The density operator **180** has a unique representation as a linear combination **190** of the Pauli operators and the identity operator. Finally, a vector whose elements are the coefficients of said linear combination is defined as the super-ket representation **195** of a density operator.

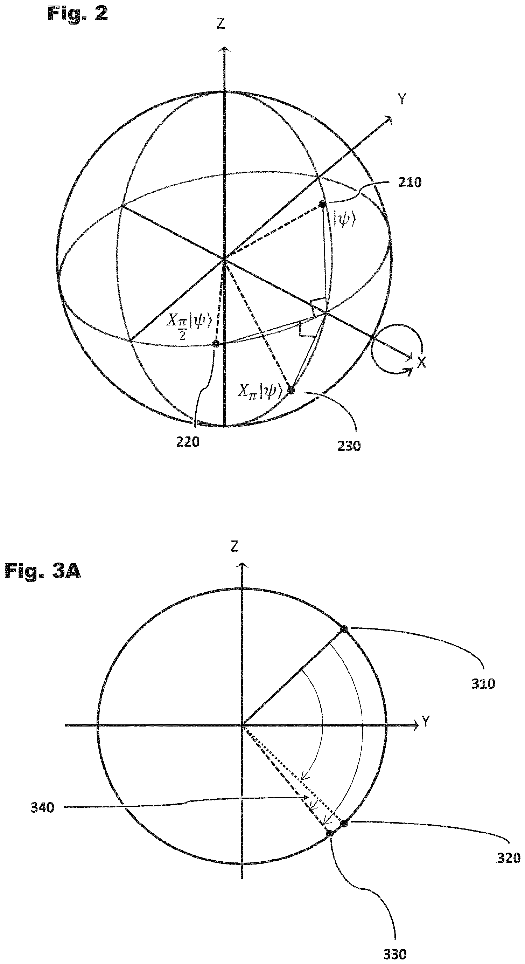

**Fig. 2** illustrates a rotation around the x-axis of an initial state $|\psi\rangle$ **210** by $\frac{\pi}{2}$ to the state $X_{\pi/2}|\psi\rangle$ **220** and by $\pi$ to the state $X_\pi|\psi\rangle$ **230**.

*Quantum logic operations and implementation errors*

The mathematical formalism used in the following description is reviewed hereinbelow.

A quantum processor, or quantum processing unit (QPU), may generally include a plurality of qubits and the following types of quantum logic operations:

1. A set of initial states supported, e.g., a quantum processor might support initializing only to a single predefined state or to a plurality of predefined states. The set of initial states is denoted $\{|\rho\rangle\rangle\}$.
2. A set of gates that may act on the qubits, e.g., a processor might support some operations involving one, two or more qubits. The set of gates is denoted $\{G\}$.
3. A set of measurements, e.g., a processor might only support measuring all the qubits at once or may support measuring any single qubit. The set of measurements is denoted $\{\langle\langle E|\}$.

The union of these three sets may be referred to as a set of quantum logic operations, or "gate set",

$$\mathcal{G} = \{\langle\langle E|\} \cup \{G\} \cup \{|\rho\rangle\rangle\}. \quad (1)$$

The term "supported" means available as a native capability. Non-native gates may be replaced by equivalent combination of native gates. Similarly, non-native initial states or measurements may be obtained by applying native gates after applying a natively available initial state, or before the application of a natively available measurement. It is customary to collectively refer to the state preparations and measurements $\{|\rho\rangle\rangle\} \cup \{\langle\langle E|\}$ as SPAM.

Mathematically, each initial state $\rho$ is a density operator, i.e. a positive semi-definite and unit-trace operator on a d-dimensional Hilbert space, where $d = 2^n$ and $n$ is the number of qubits. By choosing a Hilbert-Schmidt-orthonormal basis for Hermitian operators, each initial state can be represented as a vector $|\rho\rangle\rangle \in \mathbb{R}^{d^2}$, a so-called super-ket. The operators E are positive semi-definite and satisfy $\Sigma E = I$. Each of these may be represented as a co-vector

$$\langle\langle E| \in \left(\mathbb{R}^{d^2}\right)^*$$

, or a super-bra. The gates G are quantum channels, mapping density operators to density operators. These are represented as super-operators, i.e., $d^2 \times d^2$ matrices, $G \in \mathbb{R}^{d^2 \times d^2}$. We note that additional quantum logic operations may be considered and characterized using the method presented in this disclosure, such as reset gates, adaptive measurements, and mid-circuit measurements.

Each element in the gate set will have an ideal implementation, as intended by the hardware manufacturer. The ideal gate set may be denoted by

$$\mathcal{G}_0 = \{\langle\langle E_0| \} \cup \{G_0\} \cup \{|\rho_0\rangle\rangle\}. \quad (2)$$

As described in more detail below, we do not restrict the ideal gates $G_0$ to act non-trivially only on a small subset of qubits, e.g. to be 1- or 2-qubit gates. The ideal gates may act non-trivially on all qubits in the QPU, and can therefore be viewed as quantum-circuit-layers. Accordingly, we refer to a product of gates as a 'sequence' or a 'circuit' interchangeably. In some embodiments of the disclosed method, the gate set to be characterized contains at least one SPAM operation, or at least one non-idle gate, i.e. a gate $G$ such that $G_0$ is not the identity matrix on all qubits.

The set of implementation errors may be defined as the difference between the actual implementation in Equation (1) and the ideal implementation in Equation (2). A Markovian error model may be used for simplicity without limitation of the scope of the present disclosure. In particular, this means that each gate set element may have a unique implementation error, independent of other circumstances. Such circumstances can include quantum operations applied previously, the time of day, etc. Additionally, it is noteworthy that given a Markovian error model on the full device, restricting attention to a particular patch generally leads to non-Markovian errors on that patch.

Each of the ideal gates $G_0 = U_0 \otimes U_0^*$ corresponds to a unitary operator $U_0 \in SU$(d), which acts on density operators as $\rho \mapsto U_0 \rho U_0^\dagger$. A coherent/unitary/Hamiltonian implementation error corresponds to an inaccurate unitary implementation, i.e., $G = U \otimes U^*$ with $U \neq U_0$. An incoherent/dissipative implementation error corresponds to a slightly non-unitary implementation, due to un-wanted interactions between the QPU and the rest of the universe.

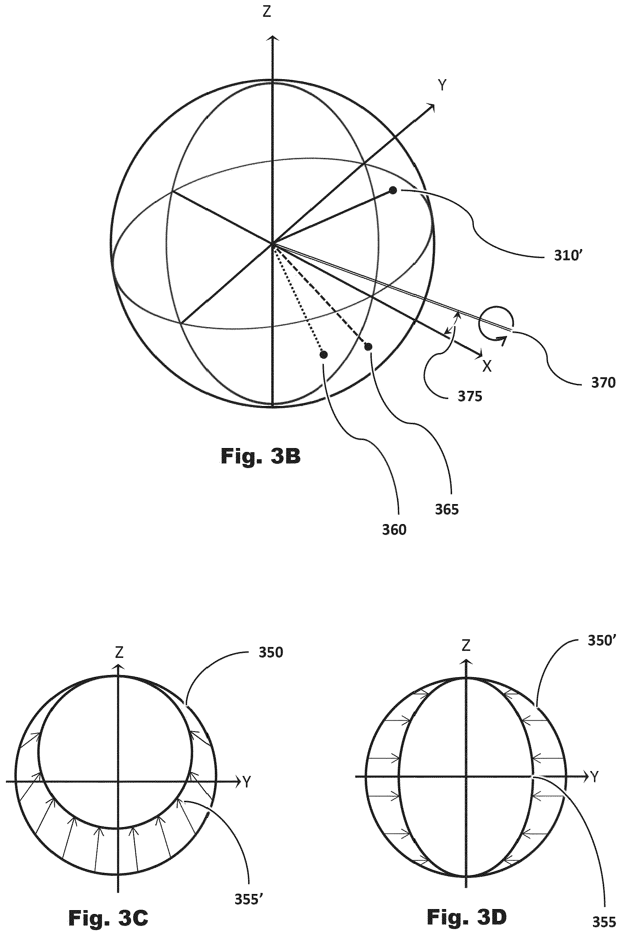

**Figs. 3A-3D** illustrate examples of implementation errors in single- and two-qubit gates. In **fig. 3A** an intended $X_{\pi/2}$ rotation gate over-rotates a state **310** into the state **330** (drawn with a coarsely dashed line) instead of the correct state **320** (drawn with a finely dashed line). **Fig. 3B** illustrates an error **375** in the rotation axis of an $X_\pi$ gate. The actual rotation axis is **370,** and the state **310'** is rotated into the state **365** instead of **360.** In **fig. 3C** amplitude damping, or $T_1$-decay, is illustrated. Pure states residing on the Bloch sphere **350** are pushed towards the $|0\rangle$ state, eventually losing any information stored in the qubit. In **fig. 3D** dephasing, or $T_2$-decay, is illustrated. Pure states residing on the Bloch sphere **350'** are pushed towards the z axis, losing the phases θ **160** and φ **170,** eventually mapping the qubit to a random classical bit.

Commonly, quantum processors admit a unique native initial state, ideally given by $|\rho_0\rangle\rangle = |0\rangle\rangle^{\otimes n}$, where $|0\rangle\rangle$ corresponds to the state $|0\rangle\langle 0|$, or simply 10), on each qubit. $|\rho_0\rangle\rangle$ may also be written as $|0\rangle\rangle$, where 0 is now understood as an n-bit, rather than a single-bit, number. Similarly, $\langle\langle E_i| = \langle\langle i|$ may correspond to a parallel measurement of all qubits in the 0-1 basis, each resulting in a binary outcome. These $n$ bits may then be collected into an $n$-bit number $i \in \{0, ..., d - 1\}$. SPAM implementation errors can be understood as unwanted gates acting on the SPAM, e.g., $|\rho\rangle\rangle = G_\rho |\rho_0\rangle\rangle$.

Given the basic quantum logic operations in the gate set, each quantum circuit which can be implemented on the QPU corresponds to the application of a particular sequence of gates, labeled by $\mathbf{j} = (j_1, ..., j_t)$ to the initial state, and a subsequent measurement which outputs one of the possible outcomes $i = 0, ..., d - 1$. The symbol $t$ may denote the number of gates in a sequence. The probability for the $i^{th}$ outcome for the sequence j in the gate set $\mathcal{G}$ is given by

$$p_i = p_{i,j}(\mathcal{G}) = \langle\langle E_i| G_{j_t} \cdots G_{j_1} |\rho\rangle\rangle, \quad (3)$$

By repeating the same circuit N times, or shots, the frequencies $f_i = N_i/N$ may be collected, where $N_i$ is the number of times the outcome i was obtained. The frequencies are multinomial random variables, with means $p_i$, and variances $p_i(1 - p_i)/N,$ and therefore correspond to experimentally available approximations for the probabilities $p_i$, with statistical errors $\sim 1/\sqrt{N}$. The ability to send quantum circuits and shot numbers to the QPU and receive the resulting measurement outcomes may be referred to as gate-level access to the QPU. This is the standard level of access provided to users by hardware manufacturers. A more detailed level of access may be referred to as 'pulse-level', and corresponds to users which can define and manipulate the time-dependent laser pulses generating gates. Such users may be interested in a direct characterization of pulses, rather than of the corresponding gates, and the method presented in the present disclosure is applicable to such pulse-level characterization protocols.

Finally, an important implication of equation (3) is that outcome probabilities are invariant under basis changes $A \in GL(d^2)$,

$$\langle\!\langle E_i| \mapsto \langle\!\langle E_i'| = \langle\!\langle E_i|A \quad (4)$$

$$G_j \mapsto G_j' = A^{-1}G_j A$$

$$|\rho\rangle\!\rangle \mapsto |\rho'\rangle\!\rangle = A^{-1}|\rho\rangle\!\rangle$$

which are therefore referred to as "gauge transformations". It follows that gate sets related by gauge transformations, $\mathcal{G} \sim \mathcal{G}'$, are physically indistinguishable, and a given QPU is actually described, at gate-level, by an equivalence class of such gate sets. A similar gauge-equivalence occurs also in a pulse-level description of QPUs.

*Gate Set Tomography (GST)*

Gate set tomography (GST) is a well-known protocol for the characterization of quantum logic operations. It is described herein as an example of a detailed characterization protocol. Its main drawback is the exponential scaling of required resources with the number of qubits, currently presenting difficulty in applying it to quantum processors numbering more than a few qubits.

The GST protocol is reviewed hereinbelow as a basis for the later description of embodiments of the present disclosure.

The goal of GST is to characterize implementation errors, given gate-level access to the QPU. This goal may be achieved in a few steps:

1. Model specification: a parameterization of the gate set $\theta \mapsto \mathcal{G}(\theta)$, is chosen by the user. This choice may be based on physical considerations, for example so as to lead to a small number of parameters providing a useful description of the device.

2. Sequence selection: A set of quantum circuits {j} is chosen, such that, collectively, the outcomes probabilities $p_{i,\mathbf{j}}(\theta) = p_{i,\mathbf{j}}(\mathcal{G}(\theta))$ of all sequences are highly sensitive to the model parameters $\theta$. The sequence selection is further explained below.

3. Data acquisition: The chosen sequences {j} are inputted to the QPU, along with a chosen number A of shots per sequence, and the resulting frequencies $f_{i,\mathbf{j}}$ may be collected.

4. Model fitting: The parameterized gate set $\mathcal{G}(\theta)$ may be fitted to the obtained frequencies, by maximizing the likelihood of $p_{i,\mathbf{j}}(\theta)$ given the data $f_{i,\mathbf{j}}$. This produces a maximum likelihood estimate $\theta_{ML}$.

5. Gauge optimization: The estimate $\theta_{ML}$ represents a gauge orbit of parameters, corresponding to gauge-equivalent gate sets. A particular representative $\theta_{est}$ may be chosen by minimizing the distance to the ideal gate set over the gauge orbit. The distance function is usually the Frobenius distance, weighted and summed over all gate set elements.

6. Error bars: An estimate for the statistical error in $\theta_{est}$, due to statistical errors in the data $f_{i,\mathbf{j}}$, may be computed. The Applicant has found that this may be advantageously done using a Jacobian $J = \partial p/\partial \theta$ evaluated at $\theta_{est}$, where $p$ runs over all parameterized GST probabilities, labeled by j and the measurement outcome i, and $\theta$ runs over model parameters.

Characterization protocols, and GST in particular, require both quantum and classical resources. A practical way to quantify the quantum resources is to measure the QPU time, which is the amount of time the data acquisition step takes. This is generally a device-dependent function $T_{QPU}(N, \{\mathbf{j}\})$ of the number of shots per sequence, and the set of characterization sequences. As an example, on superconducting-qubit devices, the length $t = t_{\mathbf{j}}$ of each sequence may not be a substantial factor influencing the QPU time because gate times are short i.e., of the order of about 10ns.

However, the number of distinct sequences $N_{seq} = |\{j\}|$ may be a substantial factor influencing the QPU time. First, the number of distinct sequences controls the total number of shots $N_{seq} \times N$ which is significant because reset times may be long, i.e., in the order of about 100$\mu$s. Second, $T_{QPU}$ can depend directly on $N_{seq}$, depending on how sequences are compiled into pulses acting on qubits.

Herein more details are provided on the sequence selection (step 2 of the GST protocol), which are relevant for the subsequent description of embodiments in the present disclosure.

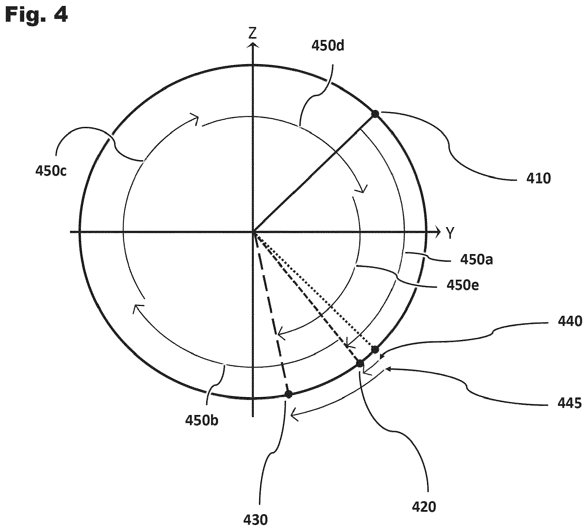

In order to achieve a high sensitivity to model parameters, GST uses mostly-periodic long gate sequences, of the form $Fg^qF'$, with logarithmically-space powers q between 1 and $q_{max} \gg 1$, e.g. $q \in \{2^k\}_{k=1}^{\log_2(q_{max})}$ . Here $F, F'$, $g$ are short gate sequences, e.g., $g = G_{jl} \ldots G_{j1}$. The sequence time $t$ is therefore $t \sim ql$, and the maximal power $q_{max}$ may be chosen such that the corresponding time is $t_{max} \sim 1/\epsilon_{max}$, where $\epsilon_{max}$ is an estimate for the largest implementation error expected on the QPU. The period $g$ is referred to as a germ. The germ may be configured to amplify errors in the parameters of the gates from which said germ is comprised. Error amplification is illustrated in **fig. 4.** An $X_{\pi/2}$ gate has an over-rotation error **440,** and rotates the state **410** to the state **420.** If the rotation is performed 5 times **450a-450e** the state **430** (drawn with the coarsest dashed line) is obtained, and the accumulated error **445** is 5 times larger.

The parameter variations $\delta\theta$ that may be amplified are those for which $\delta g = (\partial g/\partial\theta)\delta\theta$ commutes with the germ, $[g, \delta g] = 0$. This defines a linear space of amplified variations for each germ, $amp(g)$. A first goal of a sequence selection algorithm may be to choose enough germs $g_\alpha$ such that the space of all amplified variations $\sum_\alpha amp(g_\alpha)$ has the maximal rank.

The initial and final circuits $F, F'$ are referred to as fiducial circuits and may be configured such as to prepare a set of initial states and measurements, starting from the natively available $|\rho\rangle\rangle$ and $\langle\langle E_i|$. A second goal of a sequence selection algorithm may be to choose, for each germ, a set of fiducial circuits which, collectively, have a large overlap with all amplified variations.

Both goals of sequence selection may be obtained by maximizing the Jacobian $J = \partial p/\partial\theta$, evaluated at the ideal point in parameter space $\theta_0$, defined such that $\mathcal{G}(\theta_0) = \mathcal{G}_0$ . This is done by minimizing the (properly normalized and regularized) score function $Tr((J^TJ)^{-1})$, which approximates the statistical estimation error (measured by a Frobenius distance) of a GST protocol using the sequences from which $J$ is constructed. In this manner, the sequence selection algorithm chooses sequences which minimize the error bars of estimated model parameters. At the end of a successful sequence selection, each amplified parameter will have a statistical error $\delta\theta \sim 1/(t_{max}\sqrt{N}) \ll \epsilon_{max}$ , so the largest amplified errors on the QPU can be characterized with a small relative error.

*Neighboring gate sequences*

As described in the Background section, detailed characterization methods known in the art, such as GST, require computational resources which quickly become infeasible as the number of qubits grows. A standard approach to dealing with this problem is to segment the plurality of qubits into "patches" - small subsets of qubits - and characterize each patch by itself, while ignoring the remaining qubits.

Naive segmentation is problematic due to crosstalk - unwanted interactions - between qubits which are in the patch and qubits of the QPU which are not in the patch, referred to as 'environment qubits'. As demonstrated below, patch-environment interactions lead to an inaccurate characterization of implementation errors in the patch, and may be the limiting factor in the performance of single-patch characterization protocols, and multi-patch protocols constructed from these. The characterization error in single-patch protocols introduced by patch-environment interactions may be referred to as 'patching error'.

The present disclosure addresses the above problem by adding 'neighboring gate sequences' in parallel to the characterization sequences (such as GST sequences described above), said neighboring gate sequences being applied to a subset of environment qubits, referred to as 'neighboring qubits', or as the 'patch neighborhood'. The neighboring qubits may comprise qubits outside the patch (i.e., environment qubits) which are interacting with the qubit patch for example as defined by an interaction graph, or more generally, a hypergraph (which may also be referred to as a coupling map). The vertices of the interaction hypergraph may represent the qubits in the QPU, while the hyperedges may correspond to subsets of multiple qubits suspected to be interacting via multi-qubit implementation errors, or crosstalk. In some embodiments, the interaction hypergraph may be specified by a user. In some embodiments, the hypergraph may be defined such that hyperedges correspond to subsets of multiple qubits on which native multi-qubit gates exist in the QPU. The qubits in such subsets must be physically coupled in order to allow for the application of said native gates, and it is therefore natural to expect that these qubits will also suffer significant crosstalk. While characterization sequences are configured to produce measurement outcomes which are highly sensitive to implementation errors in the characterized patch, the neighboring gate sequences are configured to reduce the sensitivity of measurement outcomes to implementation errors involving the environment qubits, and more specifically, the neighboring qubits. Such a manipulation of the neighboring qubits results in reduced patching errors, enabling a reliable characterization of individual patches, and as a result, of full quantum processors.

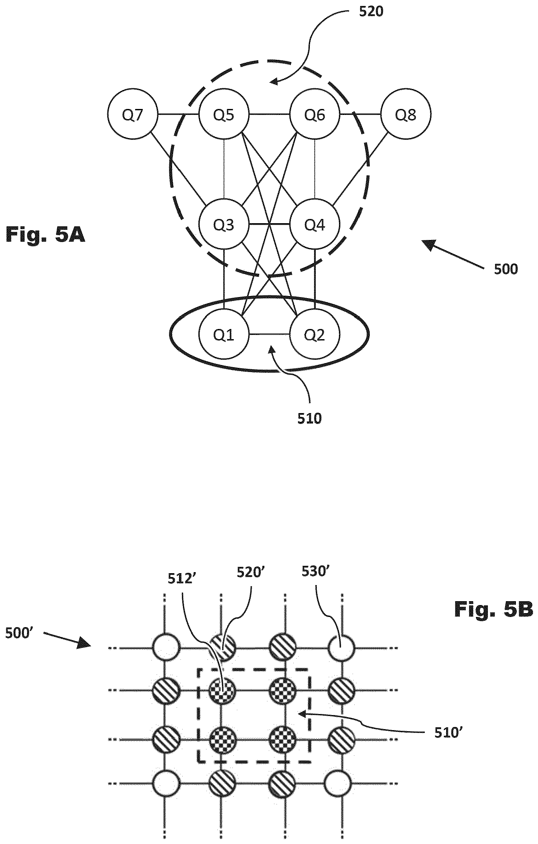

**Fig. 5A** illustrates an interaction graph in a quantum processor **500** including a plurality of qubits. The quantum processor **500** has eight qubits, labeled Q1 to Q8. The interaction graph shows qubits that are suspected to be interacting via 2-qubit implementation errors as connected with a thin line. A patch **510** may be defined and comprise two qubits Q1 and Q2. The qubits outside of the patch may be referred to as environment qubits. The environment qubits interacting with the patch qubits may be referred to as neighboring qubits. In **Fig. 5A,** the patch **510** is encircled with a thick solid line. The patch qubits directly interact with qubits Q3, Q4, Q5, and Q6. These four qubits constitute the neighboring qubits **520** in an embodiment in which the neighboring qubits consist of the qubits outside the patch directly coupled with qubits in the patch. The neighboring qubits are encircled with a thick dashed line. Qubits Q7 and Q8 are not neighboring qubits. Based on the interaction graph, these environment qubits do not directly interact with the patch qubits Q1, Q2, only indirectly through the neighboring qubits. More generally, interactions may involve not only pairs of qubits, but also triplets, quadruplets, or more generally subsets of multiple qubits, in which case the interaction graph used to define the neighboring qubits is replaced by a hypergraph.

**Fig. 5B** illustrates a different interaction graph **500'** including a plurality of qubits. Each qubit is represented by a circle, and interacting qubits are connected via a line. In this embodiment, interactions are assumed only between geometrical nearest neighbors, i.e., a qubit may interact only with the qubits directly to the left, right, above or below. Different embodiments may model the interactions differently, e.g., between geometrical next-nearest neighbors. A patch **510'** consists of the qubits marked with a checker-board pattern, such as qubit **512'**, with a total of four qubits. The neighboring qubits are marked with diagonal stripes pattern, such as qubit **520'**, with a total of eight qubits. Four qubits, such as qubit **530'**, are outside both the patch and the neighboring qubits and are marked plain white.

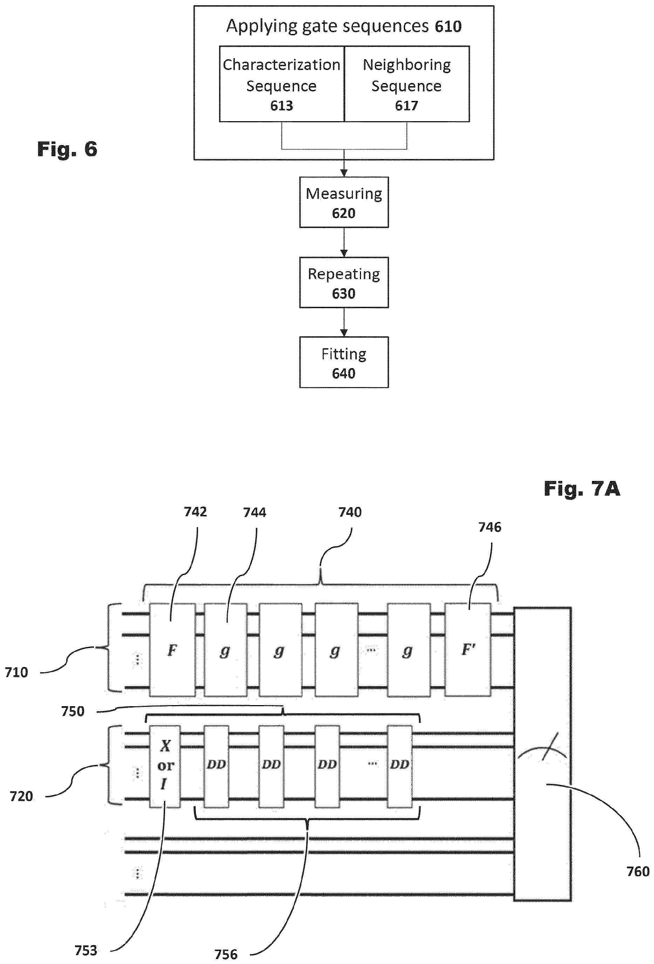

**Fig. 6** is a flowchart illustrating steps of a computer implemented method for characterizing implementation errors in a set of quantum logic operations of a quantum processor according to embodiments of the present disclosure. As explained above, the quantum processor may include a plurality of qubits and a gate set. The gate set may include initialization and measurement operations. The gate set may be configured to operate on single qubits or pairs of qubits. The method may include defining a subset of qubits also referred to as a qubit patch. The gate set may act on said qubit patch and implementation errors involving the qubit patch may be modeled by a model including a plurality of model parameters.

The method may include a step **610** of applying a set of quantum circuits on the quantum processor. Applying said set of quantum circuits may include applying characterization gate sequences **613** to said qubit patch and applying neighboring gate sequences **617** to neighboring qubits. The characterization gate sequence may for example be a GST sequence. The neighboring qubits - as explained hereinabove with reference to **Fig. 5** - are qubits which are not in the patch but are assumed to be interacting with qubits in the patch. The neighboring gate sequences are configured to reduce the sensitivity of measurement outcomes to implementation errors involving environment qubits outside the qubit patch.

The method may further include a step of measuring **620** said qubits. The measuring of said qubits may be performed using a measurement apparatus of said quantum processor. In some embodiments, the measuring may include measuring some or all of the qubits of the quantum processor. In some embodiments, the measuring may include measuring the patch qubits.

The method may further include a step of repeating **630** steps **610-620** to collect a set of frequencies associated with a measurement outcome and a quantum circuit. In some embodiments, measuring said qubits may be performed on patch qubits and environment qubits. The method may then may further comprise computing reduced frequencies from the set of all frequencies by summing over frequencies corresponding to outcomes that differ only in the value of environment qubits. In some other embodiments, measurement of the patch qubits may be performed separately from the environment qubits, and the step of computing reduced frequencies may not be required.

The method may further include a step of fitting **640** the model parameters to said set of frequencies. The fitting principle may be similar to the fitting principles used for the GST protocol as explained hereinbelow.

In some embodiments, the method may be successively applied to a series of different qubit patches. This may provide a full characterization of the quantum processor.

In some embodiments, the method may be repeatedly applied to a same qubit patch, and fitted parameters obtained in each repetition may be used to construct both neighboring gate sequences and characterization gate sequences for the next repetition. This may provide a characterization of the patch over time.

In some embodiments, the neighboring gate sequence may be configured to reduce a patching error estimated by a perturbative expansion.

In some embodiments, the neighboring gate sequence may be configured to cancel or reduce the leading orders in said perturbative expansion.

*Patching errors: mathematical definition*

Hereinbelow, a detailed example, including a precise mathematical definition for patching errors is provided. Within this example, a perturbative computation of patching errors is subsequently performed, followed by examples of neighboring gate sequences motivated by the perturbative expansion, as well as numerical simulations demonstrating the performance of said neighboring gate sequences in realistic scenarios.

An n-qubit QPU, with native gate set $\mathcal{G}_{QPU} = \{G_j\}$ including 1- and 2-qubit gates is provided. It is assumed that each gate may be represented as $G_j = e^{h_j + L_j}$ where $h_j$ is the ideal Hamiltonian generator of the gate, and $L_j$ is an 'error generator', which is mathematically a 'Lindbladian', accounting for both coherent and dissipative implementation errors occurring during the ideal gate operation. Implantation errors occurring before or after the ideal gate may easily be incorporated. More generally, time-dependent generators $h_j + L_j$ may be considered, and may additionally be viewed as the basic objects to be characterized, in place of the corresponding gates $G_j$. This leads to the pulse-level characterization protocols mentioned above. The description of implementation errors in terms of error generators leads to a physically motivated definition of locality. For example, it may be assumed that interactions only exist between pairs of qubits on which native 2-qubit gates exist in $\mathcal{G}_{QPU}$, i.e., each $L_j$ is 2-local with respect to the interaction graph defined by native 2-qubit gates. This means that $L_j = \sum_{x,y} L_{j,x,y}$ is a sum of up to 2-qubit terms, accounting for implementation errors on each qubit $x = y$, and for unwanted interactions, or cross-talk, between each pair $x \neq y$ on which a native 2-qubit gate exists. The usage of error generators also leads to a physically motivated separation of coherent and dissipative implementation errors. For example, we may further assume that dissipative implementation errors affect the qubits individually, so $L_{j,x,y} = H_{j,x,y}$ is a Hamiltonian super-operator for each pair $x \neq y$. In different embodiments, these assumptions might not be assumed.

An artificial separation of the $n$ qubits into $n_{patch}$ qubits, to be considered as the 'patch', and the $n_{env} = n - n_{patch}$ complementary qubits, to be considered as the 'environment' may be made. In terms of error generators, this corresponds to a splitting

$$L_j = L_{j,patch} + L_{j,env} + H_{j,int}$$

into patch, environment, and (Hamiltonian) interaction parts,

$$L_{j,patch} = \sum_{x,y \in patch} L_{j,x,y}, \quad L_{j,env} = \sum_{x,y \in env} L_{j,x,y}, \quad H_{j,int} = \sum_{\substack{x \in patch \\ y \in env}} H_{j,x,y}.$$

Note that an operator, or super-operator, A is said to 'act only on the patch' if it can be written as $A = A_{patch} \otimes I_{env}$, where $I_{env}$ is the identity operator, or super-operator, on the environment. In our notation we use $A_{patch}$ to denote both the full $A$ and its restriction to the patch, and the precise meaning should be clear from context. An analogous statement holds for operators that 'act only on the environment', of the form $A = I_{patch} \otimes A_{env}$.

The goal of a characterization protocol applied to a single patch (' single-patch protocol') may be to characterize implementation errors $L_{j,patch}$ involving only the patch qubits, and occurring in a subset of gates $\{G_j\}_{j \in J_{patch}} \subset \mathcal{G}_{QPU}$ which are configured to ideally act in the patch, i.e. $h_j = h_{j,patch}$. In other words, the goal of a single-patch characterization protocol may be to characterize the 'patch gate set'

$$\mathcal{G}_{patch} = \left\{ G_{j,patch} = e^{h_j + L_{j,patch}} \right\}_{j \in J_{patch}}.$$

In order to achieve this goal, a single-patch protocol will send quantum circuits j = $(j_1, ..., j_t)$, with $j_k \in J_{patch}$, to the QPU, and receive $N$ random samples per-sequence from the 'reduced probabilities'

$$p_{i,j} = \langle\!\langle E_{i,patch}|\langle\!\langle I_{env}|G_{j_t} \cdots G_{j_2}G_{j_1}|\rho_{env}\rangle\!\rangle|\rho_{patch}\rangle\!\rangle. \quad (5)$$

These correspond to the preparation of an ideally tensor-product initial state $|\rho_{env}\rangle\!\rangle|\rho_{patch}\rangle\!\rangle$, the application of the chosen quantum circuit, and finally the ideal partial trace operation on the environment $\langle\!\langle I_{env}|$, and a measurement of the patch qubits $\langle\!\langle E_{i,patch}|$. Note that we implicitly account for SPAM implementation errors as the first and last gates in each gate sequence.

A single-patch characterization protocol does not account for implementation errors involving qubits out of the patch, and in particular, assumes $H_{int} = 0$. Under this assumption, the action of each gate $G_j$ with $j \in J_{patch}$ becomes

$$G_j = e^{h_j + L_{j,patch} + L_{j,env}} = e^{h_j + L_{j,patch}} \otimes e^{L_{j,env}} = G_{j,patch} \otimes e^{L_{j,env}},$$

and the reduced probabilities simplify to

$$p_{i,j}^{(0)} = \langle\!\langle E_{i,patch}|G_{j_t,patch} \cdots G_{j_1,patch}|\rho_{patch}\rangle\!\rangle, \quad (6)$$

as would be the case if the environment qubits did not exist. Since the single-patch protocol assumes it receives samples from $p_{i,j}^{(0)}$, but instead receives samples from $p_{i,j}$, it will output an incorrect estimate for implementation errors in the patch, $\{L_{j,patch}\}_{j \in J_{patch}}$, or equivalently, for the gate set $\mathcal{G}_{patch}$. We define the 'probabilities patching error' as

$$\delta p = p - p^{(0)}.$$

The corresponding systematic (i.e., infinite statistics, $N = \infty$) deviation in the estimate of $L_{j,patch}$, or alternatively $\mathcal{G}_{patch}$, may be defined the patching error itself.

As an example for a single-patch characterization protocol, consider GST applied to a single patch. A parameterization, or model,

$$\theta \mapsto \mathcal{G}_{patch}(\theta) = \left\{G_{j,patch}(\theta)\right\}_{j \in J_{patch}}$$

is first chosen. This parameterization may be of the error generator form $G_{j,patch}(\theta) = e^{h_j{}^+_{j,patch}(\theta)}$, and may be assumed to be 'large enough', in the sense that there exists a point $\theta_{real} \in \{\theta\}$ in parameter space such that $L_{j,patch}(\theta_{real}) = L_{j,patch}$.

Once GST sequences $\{j\}$ for the model $\mathcal{G}_{patch}(\theta)$ are selected, they are fed to the QPU, and the resulting 'reduced frequencies' $f_{i,j}$, where $i \in \{1, ..., d_{sys} = 2^{n_{sys}}\}$, are collected. These may be obtained from the full frequencies by summing over the $d_{env} = 2^{n_{env}}$ measurement outcomes of the environment qubits. The reduced frequencies are random samples from the reduced probabilities $p_{i,j}$ discussed above, with mean $\mathbb{E}[f_{i,j}] = p_{i,j}$, and variance $\mathbb{V}[f_{i,j}] = p_{i,j}(1 - p_{i,j})/N$. Equation (6) and the assumption of a 'large enough' parameterization imply that the $N = \infty$ and $H_{int} = 0$ GST estimate $\theta_{est}^{(0)}$ satisfies

$$\theta_{est}^{(0)} = \theta_{real},$$

or, more accurately, that the left- and right-hand sides of this equation lead to gauge equivalent gate sets,

$$\mathcal{G}_{patch}\left(\theta_{est}^{(0)}\right) \sim \mathcal{G}_{patch}(\theta_{real})$$ . For $H_{int} \neq 0$, the probabilities patching error $\delta p_{i,j} = \mathbb{E}\left[f_{i,j}\right] - p_{i,j}^{(0)}$ leads to a systematic ($N = \infty$) estimation error

$$\delta\theta_{est} = \theta_{est} - \theta_{real},$$

which may be referred to as a 'parameter patching error'. A quantitative relation between $\delta\theta_{est}$ and $\delta p$ is given by

$$\delta\theta_{est} = J^{-1}\delta p + O(\delta p^2), \quad (7)$$

where $J = \partial p/\partial\theta$ is the Jacobian of parameterized probabilities, computed at $\theta_{est}$, and $J^{-1}$ is its suitably defined pseudo-inverse, already mentioned above.

*Layer characterization, context gates and context dependence*

Above we considered a subset of gates $\{G_j\}_{j\in J_{patch}} \subset \mathcal{G}_{QPU}$ configured to ideally act in the patch, $h_j = h_{j,patch}$. More generally, gates which (ideally) act separably on the patch and environment, for which $h_j = h_{j,patch} + h_{j,env}$, may be considered. In this case the gate $G_j$ is ideally a tensor product $e^{h_{j,patch}} \otimes e^{h_{j,env}}$, with a possibly non-idle operation on the environment qubits. This includes the case where a gate $G_j$ corresponds to a 'circuit-layer' - it is ideally a tensor product of few-qubit gates acting on nonoverlapping subsets of qubits, which may cover some or all of the qubits in the QPU. The characterization of circuit-layers is useful because these frequently appear in quantum circuits implementing quantum algorithms. Generally speaking, few-qubit gate operations in quantum algorithms are performed in parallel as much as possible, in order to reduce the overall effect of dissipative processes such as dephasing or amplitude damping.

The above generalization suggests a possible refinement of the goal of a single-patch characterization protocol: characterize the patch gate set $\mathcal{G}_{patch}$ acting on the patch qubits, in the 'context gate set'

$$\mathcal{G}_{context} = \left\{G_{j,context} = e^{h_{j,env}}\right\}_{j\in J_{patch}},$$

acting on the environment qubits. That is, the gate $G_{j,context}$ should in principle be applied to the environment qubits whenever the gate $G_{j,patch}$ is applied to the patch qubits. A gate sequence that consists of context gates may be referred to as context gate sequence. Note that the above refinement is relevant even if all context gates are idle gates $h_{j,env} = 0$, and that we omit $L_{j,env}$ from $G_{j,context}$ to stress that these implementation errors are not modeled or characterized by a single-patch protocol.

In order to quantify the extent to which applying context gates in parallel to corresponding patch gates is important, the notion of 'context dependence' may be defined. Consider two different patch gates $G_{j1,patch}$, $G_{j2,patch}$, with the same ideal patch generator $h_{j1,patch} = h_{j2,patch}$, but possibly different ideal environment generators, or context gates $G_{j1,context} \neq G_{j2,context}$. The context dependence between $G_{j1,patch}$ and $G_{j2,patch}$ may be defined as the difference $L_{j1,patch} - L_{j2,patch}$. If $L_{j1,patch} = L_{j2,patch}$, the context gates $G_{j1,context}$, $G_{j2,context}$ are equivalent for the purpose of single-patch characterization, and may be freely interchanged.

Context dependence leads to a tension between reducing patching errors, and minimizing the time spent in incorrect contexts. This translates to a tension between neighboring gates sequences and context gate sequences, both acting on neighboring qubits during the application of characterization gate sequences. Generally speaking, strong context dependence favors 'dilute' neighboring gate sequences, which suppress patching errors efficiently with only few gates.

Below we demonstrate a perturbative analysis of patching errors. For simplicity, the analysis is carried out assuming all patch gates are meant to act in the idle context, and while ignoring context dependence. We then demonstrate in simulations that neighboring gate sequences motivated by the perturbative analysis can reduce patching errors efficiently even in context dependent scenarios.

*Patching errors: perturbative computation*

A perturbative computation of the probabilities patching error $\delta p_{i,\mathbf{j}}$, subsequently used to construct examples of neighboring gate sequences is detailed hereinbelow. The perturbative expansion may require that $L_{patch}$, $L_{env}$, $H_{int}$ are bounded, in a suitable operator-norm, by $\epsilon_{patch}$, $\epsilon_{env}$, $\epsilon_{int} \leq \epsilon_{max} \ll 1$. It may further be required that $t\epsilon_{max} \ll 1$, where $t = t_{\mathbf{j}}$ is the length of the sequence **j**.

For each sequence, it is convenient to express the perturbative expansion of $\delta p_{i,\mathbf{j}}$ using an 'effective error generator' $\mathcal{L}_{\mathbf{j}}^{eff}$ ,which is a super-operator on the patch such that

$$\delta p_{i,\mathbf{j}} = \langle\!\langle E_{i,patch} | G_{j_t,patch} \cdots G_{j_1,patch} \mathcal{L}_{\mathbf{j}}^{eff} | \rho_{patch} \rangle\!\rangle.$$

The effective error generator is conveniently obtained by first expanding $\langle\!\langle I_{env} | G_{j_t} \ldots G_{j_2} G_{j_1} | \rho_{env} \rangle\!\rangle$ of Eq. (5) in $H_{int}$,

$$\mathcal{L}_{\mathbf{j}}^{eff} = \mathcal{L}_{\mathbf{j},1}^{eff} + \mathcal{L}_{\mathbf{j},2}^{eff} + O(t^3 \epsilon_{int}^3),$$

where $\mathcal{L}_{\mathbf{j},m}^{eff} = O(t^m \epsilon_{int}^m)$. We then further expand $\mathcal{L}_{\mathbf{j},m}^{eff}$ in $L_{patch}$ and $L_{env}$,

$$\mathcal{L}_{\mathbf{j},1}^{eff} = \int_u \ll I_{env} | H'_{int}(u) | \rho_{env} \gg \qquad (8)$$

$$+ \int_{v<u} \left[ \ll I_{env} | H'_{int}(u) | \rho_{env} \gg, L_{patch} \right]$$

$$+ \int_{v<u} \ll I_{env} | H'_{int}(u) L_{env} | \rho_{env} \gg$$

$$+ O(t^3 \epsilon_{max}^3),$$

$$\mathcal{L}_{\mathbf{j},2}^{eff} = \frac{1}{2} \ll I_{env} | \left( \int_u H_{int}'(u) \right)^2 | \rho_{env} \gg \qquad (9)$$

$$+ \frac{1}{2} \int_{v<u} \ll I_{env} | [H'_{int}(u), H'_{int}(v)] | \rho_{env} \gg$$

$$+ O(t^3 \epsilon_{max}^3).$$

The first line in $\mathcal{L}_{\mathbf{j},1}^{eff}$ corresponds to the first and leading order in the perturbative expansion, while the other explicit parts of $\mathcal{L}_{\mathbf{j},1}^{eff}$ and $\mathcal{L}_{\mathbf{j},2}^{eff}$ makeup the second order. The integral $\int_u$ may refer to $\int_0^t du$ and $\int_{v<u}$ may refer to

$\int_0^t du \int_0^u dv$. We also defined the piecewise constant $H_{int}(u) = H_{jk,int}$ for $u \in [k-1, k]$ and $k \in \{1, ..., \mathfrak{k}\}$, and similarly for $L_{patch}(u), L_{env}(u)$ and $h(u)$. Primes denote the 'interaction picture' $A'(u) = U_j^{-1}(u)A(u)U_j(u)$, where $U_j(u) = e^{(u-k+1)jk} ... e^{hj_1}$, for $u \in [k-1, k]$, is the ideal time evolution. Equations (8)-(9) provide a complete second-order perturbative description of the probabilities patching error $\delta p$, and form an analytical basis for the construction of neighboring gate sequences in some embodiments.

*Initial states, neighborhood-mixed states and initial twirl*

The Applicant has found that for particular initial states of the environment qubits $\rho_{env}$, the expression $\ll I_{env}| H'_{int}(u)| \rho_{env} \gg$ appearing in the first two lines of Eq. (9) vanishes. For such states, Equations (8)-(10) reduce to

$$\mathcal{L}_j^{eff} = \int_{v<u} \ll I_{env}|H'_{int}(u)L_{env}(v)|\rho_{env} \gg \quad (11)$$

$$+\frac{1}{2} \ll I_{env}| \left( \int_u H_{int}'(u) \right)^2 |\rho_{env} \gg$$

$$+\frac{1}{2}\int_{v<u} \ll I_{env} |[H'_{int}(u), H'_{int}(v)]\rho_{env} \gg$$

$$+O(t^3 \epsilon_{max}^3).$$

As a first example, assume $H_{int}$ is a sum of terms $H_{x,y}$ acting as $\rho_x \otimes \rho_y \mapsto i[h_x \otimes Z_y, \rho_x \otimes \rho_y]$, where $h_x$ is a Hamiltonian operator on a patch qubit $x$, and $Z_y$ is the Pauli-Z operator in an environment qubit $y$. Here $\rho_x, \rho_y$ are density matrices on qubits $x, y$. Under the above assumption, the expression $\ll I_{env}|H'_{int}(u)|\rho_{env} \gg$ vanishes if $\rho_{env}$ is such that its reduced density matrix $\rho_y$ on each neighboring qubit $y$ (as defined above) is given by $|+\rangle\!\rangle = |+\rangle\langle+|$, where

$$|+\rangle = |+X\rangle = (|0\rangle + |1\rangle)/\sqrt{2}$$. As an example, the state

$$|\rho_{env}\rangle\!\rangle = |+\rangle\!\rangle^{\otimes n_{neigh}} \otimes |0\rangle\!\rangle^{\otimes(n_{env}-n_{neigh})},$$

where $n_{neigh}$ is the number of neighboring qubits, satisfies this condition. The above state can be efficiently prepared from the native state $|\rho_{env}\rangle\!\rangle = |0\rangle\!\rangle^{\otimes n_{env}}$ by applying a $Y_{\pi/2}$ rotation, or a Hadamard gate, to each neighboring qubit.

More generally, the Applicant has found that if the initial state of the environment qubits $\rho_{env}$ is such that its reduced density matrix $\rho_y$ on each neighboring qubit $y$ is maximally mixed, i.e., $\rho_x = I_2/2$, the expression $\ll I_{env}|H'_{int}(u)|\rho_{env} \gg$ appearing in the first two lines of Eq. (9) vanishes, for any $H_{int}$. Such a state may be referred to as 'neighborhood-mixed', and denoted $\rho_{env}^{(NM)}$. Relevant examples for neighborhood-mixed states are

$$|\rho_{env}^{(NM)}\rangle\!\rangle = \left( |0\rangle\!\rangle^{\otimes n_{env}} + |1\rangle\!\rangle^{\otimes n_{env}} \right)/2$$

$$= \left( |0\rangle\langle 0|^{\otimes n_{env}} + |1\rangle\langle 1|^{\otimes n_{env}} \right)/2,$$

and the closely related

$$|\rho_{env}^{(NM)}\rangle\!\rangle = \left( |0\rangle\!\rangle^{\otimes n_{neigh}} + |1\rangle\!\rangle^{\otimes n_{neigh}} \right)/2 \otimes |0\rangle\!\rangle^{\otimes(n_{env}-n_{neigh})}. \quad (12)$$

The above states are mixed but 'separable', or 'un-entangled', and can therefore be prepared efficiently, as described below. It should be noted that a neighborhood-mixed state can be pure, but must then be entangled, requiring a non-trivial quantum circuit to prepare. An example for such a neighborhood-mixed state is the "GHZ state" $|GHZ>>=$ $|GHZ\rangle\langle GHZ|$, where $|GHZ\rangle = \left(|0\rangle^{\otimes n_{env}} + |1\rangle^{\otimes n_{env}}\right)/\sqrt{2}$ . Compared to the state above Eq. (12), the classical probabilistic mixture is now replaced by a quantum superposition.

In some embodiments, a patching error may be estimated using a perturbative expansion and the neighboring gate sequences may comprise initializing the environment qubits in a state configured to cancel or at least reduces leading orders in said perturbative expansion.

In some embodiments, the neighboring gate sequences may comprise initializing the environment qubits in a neighborhood-mixed state.

In some embodiments, the neighboring gate sequences may comprise initializing (only) the neighborhood qubits in a neighborhood-mixed state.

In some embodiments, the definition of a neighborhood-mixed state does not include the maximally mixed state (i.e. the state where the density operator of *all* environment qubits is proportional the unit-operator).

Based on the interpretation of mixed states as probability distributions over pure states, the Applicant has found that the preparation of some neighborhood-mixed states can be obtained by including in the neighboring gate sequences an 'initial twirl'. The latter corresponds to assigning to a given characterization sequence a number of distinct neighboring gate sequences, and averaging over the corresponding frequencies. These distinct neighboring sequences may differ in their initial gate, such that the averaging corresponds to the preparation of a mixed (and neighborhood-mixed) initial state. In other words, the set of quantum circuits may include (or may consist of a series of) quantum circuit clusters wherein each quantum circuit cluster comprises a plurality of quantum circuits having a same characterization gate sequence and a distinct neighboring sequence. In these embodiments, the method may include combining (e.g. averaging) the frequencies collected on quantum circuits of the same cluster. The distinct neighboring sequences may differ in their initial gate, such that the combining (e.g. averaging) corresponds to the preparation of a mixed (and neighborhood-mixed) initial state. The initial twirl thus eliminates the first-order in the perturbative expansion of the patching error, while requiring no complex initialization procedures.

As an example, the initial twirl corresponding to the state in Eq. (12) may be such that, for each characterization sequence, two distinct neighboring sequences are assigned, the first beginning with the idle gate and the second with an $X_\pi$ gate, both applied in parallel to all neighboring qubits, and a subsequent averaging of the two distinct frequencies for each characterization sequence. A characterization method including the above initial twirl may include for example the following steps:

1. Providing an input comprising:

   a. a set {j'} of characterization gate sequences (such as GST gate sequences) that may (ideally) act within a patch; and
   b. a number of shots N for repeating the applying and measuring steps (a)-(b) of the characterization method according to the present disclosure and in particular as presented in the appended claims;

2. For each characterization gate sequence **j'**: modifying the the first (ideal) gate in the sequence to obtain a new sequence **j"**. The modification may correspond to the replacement of the first gate $G_{j_1}$ in the sequence **j'** with

$G_{j_1} \otimes X_\pi^{neighboring}$ , where $X_\pi^{neighboring}$ is the tensor product of $X_\pi$ on all neighboing qubits.

3. Applying each **j'** and **j"** to the QPU, with $N/2$ shots per sequence.

4. Collecting the corresponding reduced frequencies $f_{i,j}'$ and $f_{i,j}''$ .

5. Computing the average $f_{i,j} = (f_{i,j}' + f_{i,j}'')/2$ for each measurement outcome $i$ and sequence **j**.

The QPU time required may be $T_{QPU}(N/2, \{j'\} \cup \{j''\})$. Compared to the QPU time $T_{QPU}(N, \{j'\})$ of the bare sequences, the number of sequences doubled, but the total number of shots is unchanged.

Reiterating, the patching error with initial twirl (or neighborhood-mixing) may be of second-order only -

$$\mathbb{E}[f_{i,j}] - p_{i,j}^{(0)} = O\left(t_j^2 \epsilon_{max}^2\right)$$

- and not first order, as may be without initial-twirl/neighborhood-mixing -

$$\mathbb{E}[f'_{i,j}] - p^{(0)}_{i,j} = O(t_j \epsilon_{max})$$ The statistical error (in the frequencies) may not change:

$$\mathbb{V}[f_{i,j}] = \mathbb{V}[f'_{i,j}] = O(1/N)$$ .

As explained below and shown for example in **Fig. 7A,** the neighboring gate sequences may include an initial twirl followed by additional gates.

**Fig. 7A** illustrates a quantum circuit applied in a computer implemented method for characterizing implementation errors in a set of quantum logic operations of a quantum processor according to embodiments of the present disclosure. For example, a characterization sequence **740** (such as a GST sequence) may be applied to patch qubits **710** and a neighboring gate sequence **750** may be applied to the neighboring qubits **720**. In this embodiment, no gates (i.e. idle gates) may be applied to qubits that are outside the patch qubits **710** and are not part of the neighboring qubits **720**. After application of the characterization and neighboring gate sequences **740, 750** the qubits are measured **760**.

The characterization sequence **740** applied on the patch qubits **710** may be a GST sequence determined in accordance with the GST protocol. The characterization sequence may comprise an initial fiducial sequence **F 742**, a final fiducial sequence **F' 746** to prepare the qubits to measurement, and multiple applications of a germ **g 744**. The neighboring sequence **750** applied on the neighboring qubits **720** may comprise an initial twirl **753** and a dynamical decoupling sequence **756**.

As explained above, the neighboring gate sequence **750** may include initializing the environment qubits in a neighborhood-mixed state. In particular, the neighboring sequence **750** may include an initial twirl **753** that may include applying a $\pi$ rotation along the x-axis for each neighboring qubit only for half of the repetitions of each characterization sequence. For the other half, no rotation may be applied, symbolized as applying identity gates.

In some embodiments, at least some of the dynamical decoupling gates (or sets of gates) **756** are applied synchronously with germs, i.e. a dynamical decoupling ("DD") operation may begin simultaneously with the beginning of a germ.

In the present disclosure, the term 'coordination' may refer to a relative timing in the application of the gates. The timing may be affected by the characteristics of the processor. For example, implementation errors dictate that even simple idling of any qubit may be sensitive to the time spent idling. Examples of relative timing between gates may include simultaneous beginning of one or more gate(s) applied on one or more qubit(s) and of one or more other gate(s) applied on one or more other qubit(s), simultaneous ending of one or more gate(s) applied on one or more qubit(s) and of one or more other gate(s) applied on one or more other qubit(s), or a predetermined delay between one or more gate(s) applied on one or more qubit(s) and one or more other gates applied to the same or one or more other qubits.

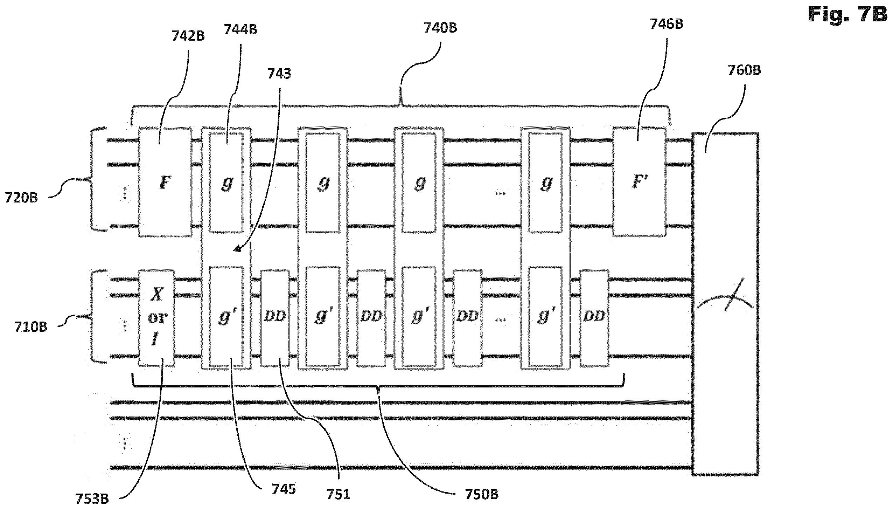

**Fig. 7B** illustrates a computer implemented method for characterizing implementation errors in a set of quantum logic operations of a quantum processor according to embodiments of the present disclosure including a context gate sequence. In embodiments as illustrated on **Fig. 7B,** the quantum circuit may comprise a characterization gate sequence **740B,** a context gate sequence **745** and a neighboring gate sequence **750B**. As explained above, gates that ideally act separably on the patch and the environment may be characterized using embodiments of the present disclosure. Such gates may be described as a gate applied to patch qubits synchronously with a corresponding (possibly non-idle) context gate applied to environment qubits. The characterization gate sequence **740B** may include characterization gates (or short sequences of such gates, i.e. germs) **g 744B** that act on the qubits of the patch **710B**. The context gate sequence **745** may comprise context gates (or short sequences of such gates) **g'** that act synchronously with the characterization gates on the neighboring qubits **720B** or more generally on the environment qubits. The combination of characterization gates and context gates may form circuit layers **743**. In some embodiments, the neighboring gate sequence **750B** may include dynamical decoupling gates **DD 751** and an initial twirl **753B** applied to the neighboring qubits **720**. The neighboring gate sequence **750B** and the context gate sequence **745** may be temporally intertwined. In some embodiments, the dynamical decoupling gates **751** may be coordinated with the context gates **745** so as to start (shortly or immediately) after the context gates ends while the context gates may be applied synchronously with their corresponding characterization gates. This implies that idle gates are added to the characterization sequence, shown as spaces between consecutive germs **g 744B**, synchronously with dynamical decoupling gates **DD 751**. In some embodiments, these idle gates can be replaced by other gates in order to further reduce patching errors or increase sensitivity to model parameters. Depending on an alleged influence of context dependence on the characterization, some context gates may be omitted and/or replaced by neighboring gates, e.g. dynamical decoupling gates. In some embodiments including a context gate sequence, at least one neighboring gate may be applied synchronously with a corresponding characterization gate.

The quantum circuit may further include an initial fiducial sequence **F 742B,** a final fiducial sequence **F' 746B,** and measurement **760B**. The germs **744B** and the fiducial sequences **742B 746B** may form the characterization gate sequence **740B**.

In some embodiments, initial and final fiducial sequences **F 742B, F' 746B** may also be performed together with corresponding context gates (not shown) and the initial twirl may be performed before the context gate corresponding to the (initial) fiducial sequence **F 742B**.

It is noteworthy that a difference in the application of dynamical decoupling, between the embodiments shown in **fig. 7A** and **fig. 7B,** may arise due to an alleged influence of context dependence. In the embodiment shown in **fig. 7A** context dependence may not be considered significant, and the dynamical decoupling may be performed synchronously with the characterization gates. In contrast, in the embodiment shown in **fig. 7B** context dependence may be considered significant, and the dynamical decoupling may be performed successively to the characterization gates.

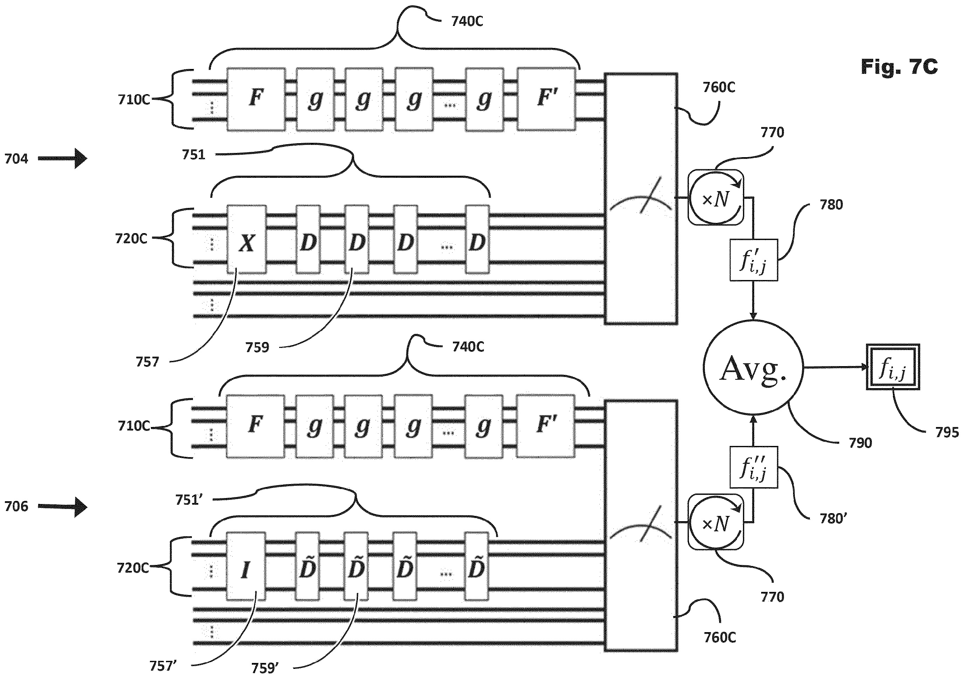

**Fig. 7C** illustrates a quantum circuit cluster applied in a computer implemented method for characterizing implementation errors in a set of quantum logic operations of a quantum processor according to embodiments of the present disclosure. In this embodiment, clustering of quantum circuits is shown. A quantum circuit cluster may consist of quantum circuit 704 and quantum circuit 706. Quantum circuits 704 and 706 may comprise a same characterization sequence **740C** that may be applied to the qubits of the patch **710C** and two different neighboring gate sequences **751 751'** that may be applied to the neighboring qubits **720C**. In some embodiments, the two neighboring gate sequences may have a different initialization while the rest of the neighboring gate sequences may be similar. As shown on **Fig. 7C,** the two neighboring sequences **751, 751'** may include a different initialization gate of the neighboring qubits. In quantum circuit 704, the neighboring qubits **720C** may be initialized with application of $\pi$ rotation along the x-axis **X 757**. In quantum circuit 706, the initialization of the neighboring qubits **720C** may be performed by applying the idle gates $I$ **757'**. The differences between two neighboring sequences **751 751'** in the illustrated embodiment may further include different dynamical decoupling sequences **D 759** and **$\tilde{D}$ 759'**. The characterization sequence **740C** may be the same regardless of the differences in the neighboring sequences **751 751'**. After each repetition, the qubits may be measured **760C**. For each quantum circuit, a predefined number of repetitions **N 770** may be performed. From each set of **N** repetitions, a corresponding frequency is obtained. Frequency $f'_{i,j}$ **780** may correspond to the quantum circuit comprising the neighboring sequence 751 and frequency $f''_{i,j}$ **780'** may correspond to the quantum circuit comprising the neighboring sequence **751'**. The two frequencies **780 780'** may be averaged **790**. This average may be the frequency $f_{i,j}$ **795** that is assigned to the characterization sequence **740C**.

In some other embodiments, the averaging of frequencies $f'_{i,j}, f''_{i,j}$ may be replaced by an averaging of the corresponding fitted model parameters. That is, the model is fitted once to the frequencies $f'_{i,j}$, resulting in the estimate $\theta'_{est}$ of model parameters, and once to the frequencies $f''_{i,j}$, resulting in the estimate $\theta''_{est}$. These estimates are then averaged, $\theta_{est} = (\theta'_{est} + \theta''_{est})/2$.

In some other embodiments, the clustering may include more than two quantum circuits per cluster, wherein each quantum circuit of a given cluster may comprise different neighboring sequences and the same characterization sequence.

In some other embodiments, the averaging may be weighted.

In some other embodiments, the averaging may be replaced by a non-linear function.

*Accidental Amplification and De-amplification sequences*

As explained above, for every quantum circuit **j** the patching error satisfies $\delta p_{i,j} = O(t_j \epsilon_{max})$ for a generic initial state $\rho_{env}$, but $\delta p_{i,j} = O(t_j^2 \epsilon_{max}^2)$ for a neighborhood-mixed initial state $\rho_{env}^{(NM)}$. The dependence of these bounds on $t_j$ is generically saturated for mostly-periodic long characterization sequences $G_{j_t} ... G_{j_1} = Fg^qF'$, such as GST sequences discussed above. Conceptually, single-patch characterization protocols may include carefully-selected mostly-periodic characterization sequences in order to amplify some of the implementation errors to be characterized, $L_{patch}$. The Applicant has found that this mostly-periodic structure also generically leads to an amplification of some of the out-of-model errors $H_{int}$, $L_{env}$ as well. The amplification of $H_{int}$, $L_{env}$ may be referred to as "accidental amplification". The accidental amplification can be easily shown for single-gate sequences $G_{j_t} ... G_{j_1} = G^t$, with effective error generator

$$\mathcal{L}_j^{eff} = G_{patch}^{-t} \langle\!\langle I_{env} | G^t | \rho_{env} \rangle\!\rangle - I_{patch}$$

. If the environment qubits are not in a neighborhood-mixed state, the leading order integral in the expansion of $\mathcal{L}_j^{eff}$ (see Eq. (8)) is given by

$$\int_u \ll I_{env}|H'_{int}(u)|\rho_{env} \gg$$

$$= t \ll I_{env}|H_{int,0}|\rho_{env} \gg + O(\epsilon_{int}),$$

where $H_{int,0}$ denotes the projection of $H_{int}$ onto the commutant of the ideal gate $G_{ideal} = e^h$ (recall the commutation requirement presented in the overview of GST). Similarly, when the environment qubits are in a neighborhood-mixed state, the leading order integrals in the expansion of $\mathcal{L}_j^{eff}$ (see Eq. (11)) are given by:

$$\int_{v<u} \ll I_{env}|H'_{int}(u)L_{env}|\rho_{env}^{(NM)} \gg$$

$$= t^2 \ll I_{env}|H_{int,0}L_{env}|\rho_{env}^{(NM)} \gg + O(t\epsilon_{int}\epsilon_{env}),$$

$$\ll I_{env}|\left(\int_u H_{int}{}'(u)\right)^2 |\rho_{env}^{(NM)} \gg$$

$$+ \int_{v<u} \ll I_{env}|[H'_{int}(u), H'_{int}(v)]|\rho_{env}^{(NM)} \gg$$

$$= t^2 \ll I_{env}|H_{int,0}^2|\rho_{env}^{(NM)} \gg + O(t\epsilon_{int}^2).$$

As long as the commutant projection $H_{int,0}$ does not vanish, which is the generic case, the leading $t = t_j$ scaling in the effective error generator is indeed saturated. This holds also for general mostly-periodic sequences.

As demonstrated above, accidental amplification implies an un-favorable scaling of patching errors with sequence length, in mostly-periodic characterization sequences. The Applicant has found that in order to eliminate the accidental amplification of out-of-model implementation errors, while maintaining the carefully constructed amplification of in-model implementation errors, neighboring gate sequences including *de-amplification* sequences may be used. In some embodiments, such de-amplification sequences may be non-periodic. In some embodiments, such sequences may be periodic and have a de-amplification period differing from a period of the characterization sequence. In some embodiments, such sequences may be un-structured and/or random, or carefully structured for de-amplification. In particular, structured 'dynamical decoupling' sequences may be used. Dynamical decoupling (DD) is well known in the art for other applications. As a basic definition, an *m*'th order DD sequence applied to a given set of qubits is one which, for ideal and instantaneous DD gates, eliminates coherent errors involving said set of qubits up to (and including) the *m*'th order in perturbation theory. A standard example for a first order DD sequence is given by the so called XY4 sequence, which may be written as X-Y-X-Y. Applied to a qubit subj ected to an unwanted Hamiltonian evolution $e^{tH} = I + O(tH)$, the XY4 sequence (with ideal and instantaneous gates) modifies the evolution to $Y_\pi e^{tH/4}X_\pi e^{tH/4}Y_\pi e^{tH/4}X_\pi e^{tH/4} = I + O(t^2H^2)$. DD is used, in some embodiments of this disclosure, to eliminate the systematic patching errors that arise in patch-based characterization protocols.

In some embodiments of this disclosure, the gates of the DD neighboring sequences may be coordinated with the gates of the characterization sequence. In some embodiments, the characterization sequence may have a periodic part (e.g. a GST sequence), and the DD sequence may be applied in parallel to the periodic part of the sequences (i.e., the GST germs). The synchronization may be such that each dynamical decoupling gate may be applied exactly with the first gate of the germ that may correspond it. The DD gates may be evenly spread over the germ repetitions. An algorithm for generating a quantum circuit including an almost-periodic characterization gate sequence and a neighboring gate sequence incorporating DD, for use in a characterization method according to the present disclosure, may for example include the following steps:

    1. Providing an input comprising:

a. a characterization gate sequence **j** that may (ideally) act within a patch. The sequence may have the structure $G_{j_t} ... G_{j_1} = Fg^qF'$ where the circuits $F,g,F'$ may have lengths $l_F$ , $l_g$ , $l_{F'}$ such that the total sequence time may be $t = t_\mathbf{j} = l_F + ql_g + l_{F'}$ ; and

b. a dynamical decoupling sequence **k** of length $m \leq q$ that may correspond to gates $D_{k_1}, ..., D_{k_m} \in \mathcal{G}_{QPU}$ that may (ideally) act on the neighboring qubits.

2. For $i \in \{1, ..., m\}$, replace the gate $G_{j_{l_F+1+l_g(i-1)\lfloor q/m\rfloor}}$ (in the sequence **j**) with the tensor product $G_{j_{F+1+l_g}(i-1)\lfloor q/m\rfloor} \otimes D_{k_i}$ . Denote the resulting sequence $\mathbf{j}^{DD}$

3. Output $\mathbf{j}^{DD}$.

Note that, in the above algorithm, the dynamical decoupling sequence may have a number of gates equal to or smaller than the number of germs. Further, Step 2 is a combination step of the characterization and DD sequences. The dynamical decoupling gates may be applied on neighboring qubits, so mathematically, this may be represented as a tensor-product of each dynamical decoupling gate with a corresponding gate of the characterization sequence. The expression $l_F + 1 + l_g(i - 1)\lfloor q/m\rfloor$ may be the time step where a dynamical decoupling gate is combined. The terms $l_F + 1$ may express the time step after the initial fiducial circuit. The dynamical decoupling sequences may be spread as evenly as possible over the germs. For example, if there are half as much dynamical decoupling gates than there are germ repetitions, then a dynamical decoupling gate may be combined with every second germ repetition. This may be expressed by the factor $\lfloor q/m\rfloor$ . The factor $l_g$ may transform a germ repetition number (in reference to the sequence of germs) to the initial gate of that germ. The factor $(i - 1)$ may index the specific dynamical decoupling gate.

Furthermore, the QPU time is unchanged by the additional of DD neighboring sequences, $T_{QPU}(N, \{\mathbf{j}^{DD}\}) = T_{QPU}(N, \{\mathbf{j}\})$, as the DD gates may be applied in parallel to the characterization sequence.

The accidental amplification may thus be eliminated, reducing patching errors as follows. For a first-order (or higher) DD sequence, the patching error may be $\mathbb{E}[f_{i,\mathbf{j}}^{DD}] - p_{i,\mathbf{j}}^{(0)} = O(\epsilon_{max})$. Neighborhood-mixing (or initial twirl) used in conjunction with a second-order (or higher) DD sequence may result in a patching error $\mathbb{E}[f_{i,\mathbf{j}}^{DD+NM}] - p_{i,\mathbf{j}}^{(0)} = O(t_\mathbf{j}\epsilon_{max}^2)$ . The statistical error may be unchanged.

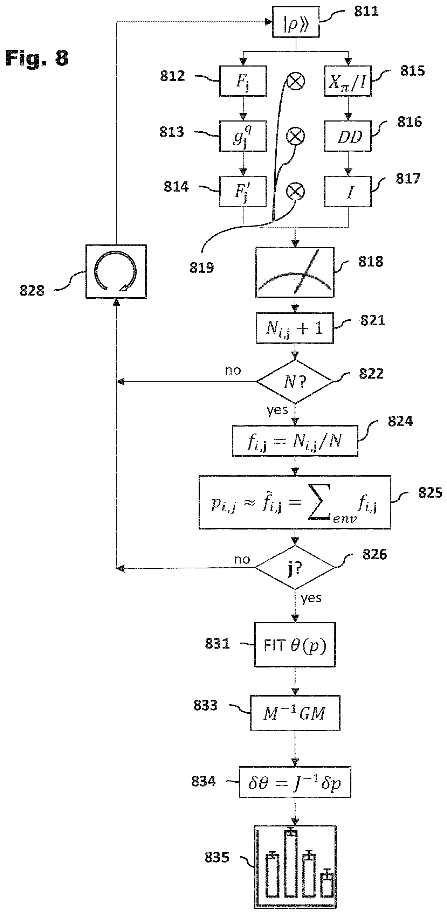

**Fig. 8** is a flowchart illustrating steps of a method for characterizing implementation errors in a set of quantum logic operations of a quantum processor according to embodiments of the present disclosure. As explained above, the quantum processor may include a plurality of qubits and a gate set. The gate set may be acting on a subset of qubits defining a qubit patch and the implementation errors involving the qubit patch may be modeled by a model including a plurality of model parameters. In a first initialization step **811,** qubits of the quantum processor are initialized in an initial state $|\rho_0\rangle\rangle$. Further, the method comprises applying a set of quantum circuits to the quantum processor wherein said set of gate sequences includes characterization sequences (such as GST sequences) applied to a qubit patch and neighboring gate sequences applied to neighboring qubits. In particular, an initial fiducial circuit **812** may be applied to the patch, in parallel to an initial twirl **815** being applied to the neighboring qubits. Next, germs **813** may be applied to the patch, in parallel to a dynamical decoupling sequence **816** being applied to the neighboring qubits. Then, a final fiducial circuit **814** may be applied to the patch in parallel to idle gates **817** being applied to the environment qubits. It is noteworthy that the tensor product symbols **819** are to emphasis that branches in the flowchart are parallel processes and not different options. In a measuring step **818,** a measurement outcome is determined by measuring the qubits. A measurement outcome counter **821** corresponding to the measurement outcome measured may be incremented. In a further step **822,** a repetition test is performed to verify if a predefined number of repetitions $N$ has been achieved. If not, in a reset step **828** the quantum processor is reset and a new repetition of the routine is started again at the initialization step **811.** If N iterations were performed, the routine proceeds to a frequency computation step **824** in which the values of the measurement outcome counters may be divided by $N$ **824** to compute the frequencies of measurement outcomes. In a further frequency reduction step **825,** some frequencies may be summed in order to aggregate measurement outcomes with same patch qubits measurement and provide to reduced frequencies. In a further step **826,** a test is performed to verify if all the characterization gate sequences of said set of quantum circuits were applied to the quantum processor. If not, the next quantum circuit is selected (an implicit counter is incremented) and the quantum processor is reset, and a new set of repetitions starts again at the initialization step **811.** If all the quantum circuits of the set of quantum circuits were applied to the quantum processor, the next steps are a fitting step **831** comprising fitting of the model parameters, a gauge optimization step 833 of performing gauge optimization, a statistical error computation step 834 comprising computing the statistical error in the parameters, and finally, a result representation step 835 comprising representing the results for example by displaying said results using a bar graph.

In some embodiments, the characterization method described herein may be repeated using a plurality of different (distinct) patches. i.e. the characterization method may be successively applied to a plurality of subsets of qubits of a quantum processor.

In some embodiments, the plurality of distinct patches may cover all of the qubits of the quantum processor. In some embodiments, the plurality of distinct patches may overlap, i.e. different patches may have at least one qubit in common. Overlapping patches may be desired, for example, in order to collectively characterize all interactions specified by the interaction hypergraph. In some embodiments, some of the patches may contain more than two qubits (e.g., three, four, five or more qubits). In some embodiments, the sequences corresponding to different patches (including both characterization and neighboring gate sequences) may be applied in parallel, in order to reduce the overall QPU time.

While the method set forth hereinabove presumed qubits, the method is more generally applicable to QPUs utilizing quantum systems with $M \geq 2$ logical states. Quantum systems with two or more logical states are known as 'qudits'. The mathematical framework of the presently disclosed characterization method has no dependency on the binary nature of qubits. In qudit embodiments, the neighborhood-mixed state $(|0\rangle\rangle^{\otimes n}_{env} + |1\rangle\rangle^{\otimes n}_{env})/2$ changes into

$$\frac{1}{M}\sum_m |m\rangle\rangle^{\otimes n_{env}}$$

where $m = 1, ..., M$. Using initial twirl, the $N$ repetitions (shots per sequence) are split to $M$ 'sub-repetitions', with initializing in each sub-repetition the environment's qudits to one of each of the $M$ states. For example, in a processor built using three-level systems ('qutrits'), the neighborhood-mixed state is $(|0\rangle\rangle^{\otimes n}_{env} + |1\rangle\rangle^{\otimes n}_{env} + |2\rangle\rangle^{\otimes n_{env}})/3$. Using initial twirl, the $N$ repetitions are split to three instead of two.

Note that the disclosed method is based on a logical description of the QPU, and may be applied if qubits are 'encoded' or 'logical' rather than 'physical' - i.e. corresponding to general 2-dimensional subspaces in the space of physical states of the QPU. The same statement holds for a QPU described by logical qudits, and is relevant in particular for the application of the disclosed method to QPUs implementing quantum error correction, computation in decoherence free subspaces, and topological quantum computation.

*Simulation results*

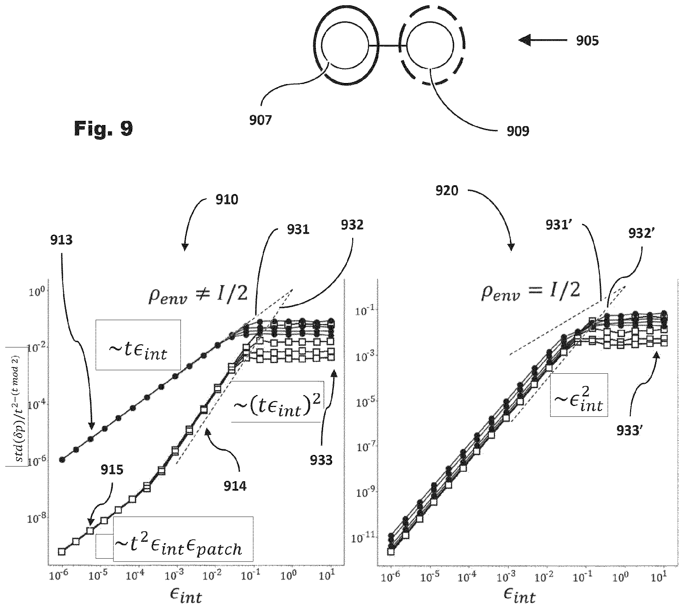

**Fig. 9** shows simulation results of applying a characterization method according to some embodiments of the present disclosure. In particular, Fig. **9** provides an example of canceling the first order error in the perturbation expansion of a patching error. A quantum processor **905** consisting of two qubits is simulated. The patch **907** consists of one qubit and the environment **909** consists of the other qubit, which is a neighboring qubit. The graphs **910, 920** show the patching-error $\delta p_{i,\mathbf{j}}$ as a function of the strength of the interaction between the patch and the environment $\epsilon_{int}$. Graph **910** shows the patching error without using initial twirl - the neighboring/environment qubit is initialized to zero. Graph **920** shows the patching error when using the initial twirl. The graphs' axes are logarithmic in both the x-axes and the y-axes.

The simulated characterization sequences **j** correspond to the application of $X^{t}_{\pi/2}$ to the patch qubit, with time $t = 2, ...,9$, corresponding to the different curves, and the measurement outcome is $i = 0$. Each $\epsilon_{int}$ corresponds to the standard deviation of a normal distribution from which the interaction Hamiltonian $H_{int}$ is sampled. Similarly, $L_{patch} = H_{patch}$ is sampled, with a fixed $\epsilon_{patch} = 10^{-3}$. The y-axis corresponds to the standard deviation of $\delta p_{i,\mathbf{j}}$ over many samples from these distributions, scaled by $t^2$ ($t$) for t even (odd). (The mean of $\delta p_{i,\mathbf{j}}$ over randomly-sampled coherent implementation errors vanishes).

Visible in the graphs are eye-guides for linear scaling **931 931'** and for quadratic scaling **932 932'** with $\epsilon_{int}$. Without the initial twirl, the patching error of the odd-length sequences, marked with solid circles, scales as $t\epsilon_{int}$ **913** and the patching error of the even-length sequences, marked with hollow squares, scales as $t^2 \epsilon^2_{int}$ **914** for $\epsilon_{int} \gg \epsilon_{patch}$, and as $t^2 \epsilon_{int}\epsilon_{patch}$ for $\epsilon_{int} \ll \epsilon_{patch}$ **915**. With initial twirl, the $t\epsilon_{int}$ and $t^2 \epsilon_{int}\epsilon_{patch}$ contributions vanish, and the patching is reduced significantly. Both with initial twirl and without initial twirl, the patching error saturates at high $\epsilon_{int}$ values **933 933'**.

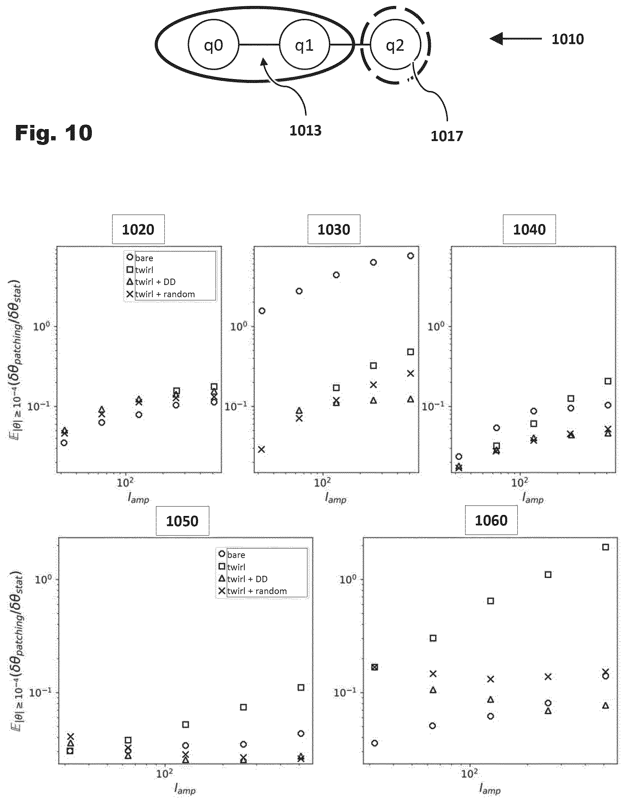

**Fig. 10** shows simulation results of applying a characterization method according to some embodiments of the present disclosure. In particular, a ratio of the patching error to the statistical error in GST model parameters, $\delta\theta_{patching}/\delta\theta_{stat}$, is illustrated. A quantum processor **1010** consisting of three qubits is simulated, including interactions between the characterized patch and its environment, and context dependence. The patch **1013** consists of two qubits, labeled **q0** and **q1**. The environment **1017** consists of one qubit, labeled **q2.** The environment qubit **q2** interacts only with patch qubit **q1.** Graphs **1020,1030,1040** show the ratio $\delta\theta_{patching}/\delta\theta_{stat}$ for coherent parameters (e.g., rotation angles), supported on qubit **q0,** qubit **q1** and **q0-q1** interactions, respectively. Graphs **1050, 1060** show the ratio $\delta\theta_{patching}/\delta\theta_{stat}$ for incoherent parameters (e.g., dissipation rates) supported on qubit **q0** and qubit **q1,** respectively. The graphs' axes are logarithmic in both the x-axes and the y-axes.

For simplicity, the errors for different parameters are averaged, and this average (y-axis) is plotted as a function of the number of germs in the characterization sequence (x-axis). Only significant implementation errors, with magnitude larger than $10^{-4}$ are included in the average. Every sequence was repeated for $N$=300 shots. Four datasets are plotted. The first data set corresponds to 'bare' characterization sequences, with no added neighboring gate sequences (shown as circle). The remaining data sets correspond to characterization sequences with the following types of neighboring gate sequences: initial twirl (shown as square), initial twirl followed by structured second order dynamical-decoupling sequences (shown as triangle) and initial twirl followed by an equally spaced random sequence (shown as crosses).

A significant reduction of patching error (compared to the statistical error) for the coherent parameters of qubit **q1** is achieved as shown in graph **1030,** as predicted by the perturbative expansion. In general, it is noteworthy that without initial twirl, for some $\text{parameters} \dfrac{\delta\theta_{patching}}{\delta\theta_{stat}} \gg 1$ for some parameters while with the initial twirl, $\dfrac{\delta\theta_{patching}}{\delta\theta_{stat}} \lesssim 1$ for all parameters.

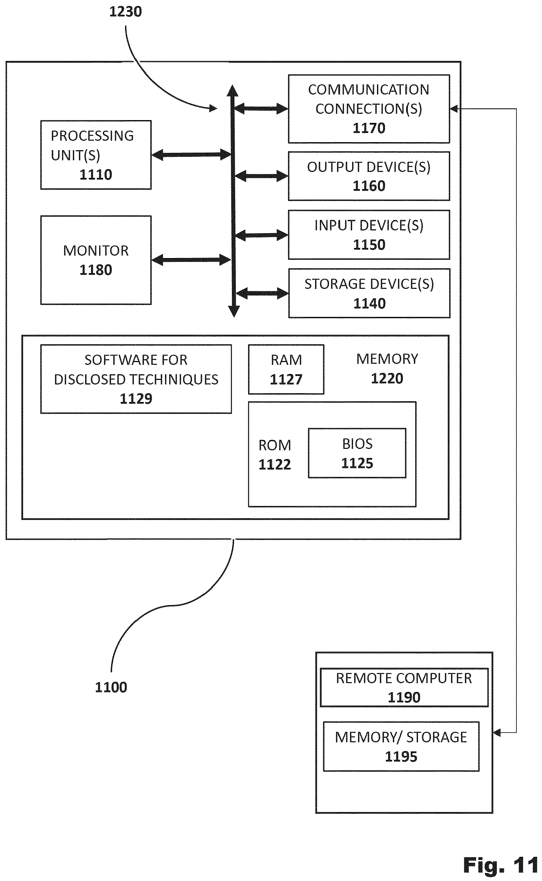

**Fig. 11** and the following discussion are intended to provide a brief, general description of an exemplary computing environment in which the disclosed technology may be implemented. Although not required, the disclosed technology is described in the general context of computer executable instructions, such as program modules, being executed by a personal computer (PC). Generally, program modules include routines, programs, objects, components, data structures, etc., that perform particular tasks or implement particular abstract data types. Moreover, the disclosed technology may be implemented with other computer system configurations, including handheld devices, multiprocessor systems, microprocessor-based or programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules may be located in both local and remote memory storage devices.

With reference to **Fig. 11,** an exemplary system for implementing the disclosed technology includes a general purpose (classical) computing device in the form of an exemplary conventional PC **1100,** including one or more processing units **1110,** a system memory **1120,** and a system bus **1130** that couples various system components including the system memory **1120** to the one or more processing units **1110.** The system bus **1130** may be any of several types of bus structures including a memory bus or memory controller, a peripheral bus, and/or a local bus using any of a variety of bus architectures. The exemplary system memory **1120** includes read only memory (ROM) **1122** and random-access memory (RAM) **1127.** A basic input/output system (BIOS) **1125,** containing the basic routines that help with the transfer of information between elements within the PC **1100,** is stored in ROM **1122.** As shown in Fig. **11,** the system memory **1120** may store computer-executable instructions for performing any of the disclosed techniques (e.g., sending instructions to quantum computer for applying characterization gate sequences and neighboring gate sequences to a subset of qubits, measuring outcomes, collecting frequencies, computing model parameters) in respective memory portions (shown generally as executable software **1129** for performing any embodiment of the disclosed synthesis techniques)).

The exemplary PC **1200** further includes one or more storage devices **1140,** such as a hard disk drive for reading from and writing to a hard disk, a magnetic disk drive for reading from or writing to a removable magnetic disk, and/or an optical disk drive for reading from or writing to a removable optical disk (such as a CD-ROM or other optical media). Such storage devices can be connected to the system bus **1130** by a hard disk drive interface, a magnetic disk drive interface, and/or an optical drive interface, respectively. The drives and their associated computer readable media provide nonvolatile storage of computer-readable instructions, data structures, program modules, and other data for the PC **1200.** Other types of computer-readable media which can store data that is accessible by a PC, such as magnetic cassettes, flash memory, digital video disks, CDs, DVDs, RAMs, NVRAMs, ROMs, and the like, may also be used in the exemplary operating environment. As used herein, the terms storage, memory, and computer-readable media may not include or encompass propagating carrier waves or signals per se.

A number of program modules may be stored in the storage devices **1140,** including an operating system, one or more application programs, other program modules, and program data. Storage of results of quantum measurements and instructions for obtaining such measurements (and/or instructions for performing any embodiment of the disclosed technology) can be stored in the storage devices **1140.** A user may enter commands and information into the PC **1100** through one or more input devices **1150** such as a keyboard and a pointing device such as a mouse. Other input devices may include a digital camera, microphone, joystick, game pad, satellite dish, scanner, or the like. These and other input devices are often connected to the one or more processing units **1110** through a serial port interface that is coupled to the system bus **1130,** but may be connected by other interfaces such as a parallel port, game port, or universal serial bus (USB). A monitor **1180** or other type of display device is also connected to the system bus **1130** via an interface, such as a video adapter. Other peripheral output devices **1160,** such as speakers and printers (not shown), may be included. In some cases, a user interface is displayed so that a user can input a circuit for synthesis, and verify successful synthesis.

The PC **1200** may operate in a networked environment using logical connections to one or more remote computers, such as a remote computer **1190**. In some examples, one or more network or communication connections **1170** are included. The remote computer **1190** may be another PC, a server, a router, a network PC, or a peer device or other common network node, and typically includes many or all of the elements described above relative to the PC **1100,** although only a memory storage device **1195** has been illustrated in **Fig. 11.** The personal computer **1100** and/or the remote computer **1190** can be connected to a local area network (LAN) and a wide area network (WAN). Such networking environments are commonplace in offices, enterprise wide computer networks, intranets, and the Internet.

When used in a LAN networking environment, the PC **1100** is connected to the LAN through a network interface. When used in a WAN networking environment, the PC **1100** typically includes a modem or other means for establishing communications over the WAN, such as the Internet. In a networked environment, program modules depicted relative to the personal computer **1100,** or portions thereof, may be stored in the remote memory storage device or other locations on the LAN or WAN. The network connections shown are exemplary, and other means of establishing a communications link between the computers may be used.

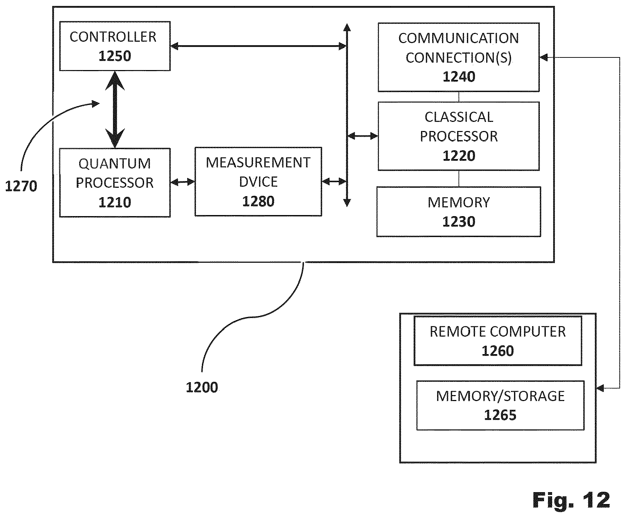

With reference to **Fig. 12,** an exemplary system for implementing the disclosed technology includes computing environment **1200,** The environment includes one or more quantum processing unit(s) **1210** including one or more monitoring/measuring device(s). The quantum processing unit(s) execute quantum circuits that are provided by a classical processing unit **1220.** The quantum circuits are downloaded into or used to program or configure the quantum processing unit(s) **1210** (e.g., via control lines (quantum bus) **1270).** Procedures according to any of the disclosed embodiments (e.g. a high-level description of the set of quantum circuits to be applied to a qubit patch and neighboring qubits) may be stored in a memory **1230.**

With reference to **Fig. 12,** the high-level description of a quantum software may be translated into quantum circuits (e.g., sequences of quantum gates, or layers of gates acting in parallel on different qubits). Such high-level descriptions may be stored, as the case may be, on one or more external computers **1260** outside the computing environment **1200** utilizing one or more memory and/or storage device(s) **1265,** then downloaded as necessary into the computing environment **1200** via one or more communication connection(s) **1240.** Quantum circuits (according to any of the disclosed embodiments) are coupled to the quantum processor **1210.**

The quantum processing unit(s) can be one or more of, but are not limited to: (a) a superconducting quantum computer; (b) an ion trap quantum computer; (c) a topological quantum computer using e.g. Majorana zero modes; (d) a photonic quantum computer; or (e) a neutral atom quantum computer. The sets of gates (e.g., using any of the disclosed embodiments) can be sent into (or otherwise applied to) the quantum processing unit(s) via control lines **1270** at a controller **1250.** In the illustrated example, the desired quantum computing process is implemented with the aid of one or more controllers **1250** that are specially adapted to control a corresponding one of the quantum processor(s) **1210.** The classical processor **1220** can further interact with measuring/monitoring devices (e.g., readout devices) **1280** to help control and implement the desired quantum computing process (e.g., by reading or measuring out data results from the quantum processing units once available, etc.)

Having described and illustrated the principles of the disclosed technology with reference to the illustrated embodiments, it will be recognized that the illustrated embodiments can be modified in arrangement and detail without departing from such principles. For instance, elements of the illustrated embodiments shown in software may be implemented in hardware and vice-versa. Also, the technologies from any example can be combined with the technologies described in any one or more of the other examples. It will be appreciated that procedures and functions such as those described with reference to the illustrated examples can be implemented in a single hardware or software module, or separate modules can be provided. The particular arrangements above are provided for convenient illustration, and other arrangements can be used.

Therefore, casting into a language of clauses, the present disclosure provides methods, systems and circuits according to, but not limited to, the following clauses:

Clause 1: a computer implemented method for characterizing implementation errors in a set of quantum logic operations of a quantum processor said set of quantum logic operations acting on a subset of qubits defining a qubit patch, wherein implementation errors involving the qubit patch are modeled by a model including a plurality of model parameters, the method comprising:

(a) applying a set of quantum circuits to the quantum processor, wherein at least some of said quantum circuits comprise:

    **i)** a characterization gate sequence applicable to said qubit patch configured to provide measurement outcomes sensitive to at least some of the model parameters; and

    **ii)** a neighboring gate sequence applicable to at least some neighboring qubits outside the qubit patch and interacting with the qubit patch, wherein said neighboring gate sequence is configured to reduce the sensitivity of measurement outcomes to implementation errors involving environment qubits outside the qubit patch;

    **(b)** measuring the patch qubits using a measurement apparatus of said quantum processor;

    **(c)** repeating (a)-(b) to collect a set of frequencies, said frequencies being associated with a measurement outcome and a quantum circuit;

    **(d)** computing a value of the model parameters by fitting the model to said set of frequencies.

Clause 2: as recited in clause 1, wherein the neighboring qubits comprise qubits interacting with the qubit patch based on an interaction hypergraph.

Clause 3: as recited in clause 2, wherein the interaction hypergraph describes subsets of multiple qubits in the quantum processor interacting via multi-qubit implementation errors.

Clause 4: as recited in clause 2, wherein the hypergraph describes subsets of multiple qubits in the quantum processor on which native multi-qubit gates can be applied.

Clause 5: as recited in any former clause, wherein the characterization gate sequence is a gate set tomography sequence.

Clause 6: as recited in any former clause, wherein said set of quantum logic operations includes initialization and measurement.

Clause 7: as recited in any former clause, wherein gates in said set of quantum logic operations are configured to operate separably on single qubits or pairs of qubits.

Clause 8: as recited in any former clauses, wherein measuring the patch qubits is performed by measuring all qubits in the quantum processor and further comprising computing reduced frequencies from the set of frequencies to aggregate outcomes with same patch qubits measurement outcomes.

Clause 9: as recited in any former clause, wherein the neighboring gate sequence is configured to reduce a patching error.

Clause 10: as recited in clause 9, wherein said patching error is estimated using perturbation expansion and the neighboring gate sequences are configured to cancel or at least reduce leading orders in said perturbation expansion.

Clause 11: as recited in clause 10, wherein the leading orders include perturbation expansion orders up to a given order.

Clause 12: as recited in clause 11, wherein said given order is the second order.

Clause 13: as recited in any former clause, wherein the neighboring gate sequence comprises initializing the environment qubits in a state configured to cancel or at least reduce leading orders in said perturbation expansion.

Clause 14: as recited in any former clause, wherein the neighboring gate sequence comprises initializing the environment qubits in a neighborhood-mixed state wherein the reduced density operator of each neighboring qubit is proportional to the unit-operator.

Clause 15: as recited in clause 14, wherein the neighborhood-mixed state is an even mixture $(|0\rangle\rangle^{\otimes n} + |1\rangle\rangle^{\otimes n})/2 \otimes |0\rangle\rangle^{\otimes(m-n)}$, wherein $m$ and $n$ are the numbers of environment and neighboring qubits, respectively.

Clause 16: as recited in any former clause, wherein the set of quantum circuits comprises of quantum circuit clusters, each quantum circuit cluster comprising a plurality of quantum circuits having a same characterization gate sequence and a distinct neighboring gate sequence, the method further comprising combining frequencies collected on quantum circuits of the same cluster.

Clause 17: as recited in clause 16, wherein the set of quantum circuits comprises quantum circuit clusters each consisting of two quantum circuits having a same characterization gate sequence and respectively a first neighboring gate sequence starting with an idle gate and a second neighboring sequence starting with a $\pi$ rotation, both first and second neighboring gate sequences being applied to each neighboring qubit, and wherein the method further comprises averaging frequencies collected on the two quantum circuits of each quantum circuit cluster.

Clause 18: as recited in any former clause, wherein at least one of said quantum circuits further comprises a context gate sequence applicable to one or more environment qubits outside the qubit patch, wherein context gates of said context gate sequence are applied synchronously to at least some characterization gates of the characterization gate sequence of said at least one quantum circuit.

Clause 19: as recited in clause 18, wherein the neighboring gate sequence and the context gate sequence are temporally intertwined.

Clause 20: as recited in clause 18 or in clause 19, wherein the neighboring gate sequence of at least one of said quantum circuits comprises at least some neighboring gates applied synchronously with at least some characterization gates of the characterization gate sequence of said at least one quantum circuit.

Clause 21: as recited any of the clauses 18 to 20, wherein the neighboring gate sequence of at least one of said quantum circuits comprises at least some neighboring gates applied successively to at least some characterization gates of the characterization gate sequence of said at least one quantum circuit.

Clause 22: as recited any of the clauses 18 to 21, wherein some of said context gates are configured to form circuit layers together with the characterization gate sequences.

Clause 23: as recited in any former clause, wherein at least one of said quantum circuits includes a neighboring gate sequence comprising neighboring gates selected randomly.

Clause 24: as recited in any former clause, wherein at least one of said quantum circuits includes a neighboring gate sequence comprising a dynamical decoupling sequence configured to reduce patching errors.

Clause 25: as recited in clause 24, wherein the dynamical decoupling sequences are configured to reduce patching errors estimated by a perturbative expansion.

Clause 26: as recited in clause 25, wherein the dynamical decoupling sequences are configured to eliminate leading orders in said perturbation expansion.

Clause 27: as recited in clause 26, wherein the leading orders include perturbation expansion orders up to a given order.

Clause 28: as recited in clause 27, wherein said given order is the second order.

Clause 29: as recited any of the clauses 24 to 28, wherein said dynamical decoupling sequence is coordinated with the characterization gate sequence of said at least one quantum circuit.

Clause 30: as recited in clause 29, wherein at least some gates of said dynamical decoupling sequence are applied synchronously with at least some gates of the characterization gate sequence of said at least one quantum circuit.

Clause 31: as recited in clause 29 or clause 30, wherein at least some gates in said dynamical decoupling sequence are applied successively to at least some gates of the characterization gate sequence of said at least one quantum circuit.

Clause 32: as recited in any former clause, wherein a qubit patch includes at least 3 qubits.

Clause 33: a computer implemented method for characterizing a quantum processor, the method comprising successively applying the method of any of claims 1 to 32 to a plurality of patches of qubits of said quantum processor.

Clause 34: as recited in clause 33, wherein said plurality of patches are overlapping.

Clause 35: as recited in clause 33 or in clause 34, wherein the plurality of patches cover all of the qubits of the quantum processor.

Clause 36: as recited in any former clause, further comprising gauge optimization.

Clause 37: a non-transient computer readable storage medium storing computer instructions, wherein the computer instructions are used for causing a computer to execute any method described as recited in any of the clauses 1 to 36.

Clause 38: a computer program product, comprising a computer program, wherein the computer program, when executed by a computer, implements any method described as recited in any of the clauses 1 to 36.

Clause 39: a method for characterizing a quantum processor including a plurality of qubits, the method comprising applying a characterization protocol to a qubit patch including a subset of qubits, wherein said characterization protocol includes reducing a patching error due to interactions between qubits inside the qubit patch and qubits outside the qubit patch.

Clause 40: as recited in clause 39, comprising successively applying said characterization protocol to a plurality of patches.

Clause 41: as recited in clause 40, wherein said plurality of patches cover altogether the plurality of qubits of the quantum processor.

Clause 42: as recited in clause 40 or clause 41, wherein at least some patches of said plurality of patches are overlapping.

Clause 43: as recited any of the clauses 39 to 42, wherein said characterization protocol includes applying neighboring gate sequences to neighboring qubits outside of the qubit patch and interacting with the qubit patch, wherein said neighboring gate sequences are configured to reduce the sensitivity of measurement outcomes to implementation errors involving qubits outside the qubit patch.

Clause 44: as recited any of the clauses 39 to 43, wherein the characterization gate sequences in said characterization protocol are configured to provide measurement outcomes which are both sensitive to implementation errors in the patch and have a reduced sensitivity to implementation errors involving qubits outside the patch.

Clause 45: as recited any of the clauses 1 to 36 or clauses 39 to 44, wherein the quantum processor is described in terms of qudits in place of qubits.

Clause 46: a quantum circuit for use in characterizing implementation errors in a set of quantum logic operations of a quantum processor said set of quantum operations acting on a subset of qubits defining a qubit patch, wherein implementation errors involving the qubit patch are modeled by a model including a plurality of model parameters, said quantum circuit comprising:

- a characterization gate sequence applicable to said qubit patch configured to provide measurement outcomes sensitive to at least some of the model parameters; and
- a neighboring gate sequence applicable to at least some neighboring qubits interacting with the qubit patch, wherein said neighboring gate sequence is configured to reduce a sensitivity of measurement outcomes to implementation errors involving environment qubits outside the qubit patch.

Clause 47: as recited in clause 46, wherein the characterization gate sequence is a gate set tomography gate sequence.

Clause 48: as recited in clause 46 or clause 47, wherein the neighboring gate sequence includes initializing the neighboring qubits in a neighborhood-mixed state.

Clause 49: as recited any of the clauses 46 to 48, wherein the neighboring gate sequence includes dynamical decoupling sequences configured to reduce patching errors.

Clause50: as recited any of the clauses 46 to 49, wherein the neighboring gate sequence includes neighboring gates selected randomly.

Clause 51: system comprising a computer and a quantum processor, the computer having gate-level or pulse-level access to the quantum processor, the system being configured to perform any method described as recited in any of the clauses 1 to 36 or clauses 39 to 45.

**Claims**

1. A computer implemented method for characterizing implementation errors in a set of quantum logic operations of a quantum processor said set of quantum logic operations acting on a subset of qubits defining a qubit patch, wherein implementation errors involving the qubit patch are modeled by a model including a plurality of model parameters, the method comprising:

   **(a)** applying a set of quantum circuits to the quantum processor, wherein at least some of said quantum circuits comprise:

   **i)** a characterization gate sequence applicable to said qubit patch configured to provide measurement outcomes sensitive to at least some of the model parameters; and
   **ii)** a neighboring gate sequence applicable to at least some neighboring qubits outside the qubit patch and interacting with the qubit patch, wherein said neighboring gate sequence is configured to reduce the sensitivity of measurement outcomes to implementation errors involving environment qubits outside the qubit patch;

   **(b)** measuring the patch qubits using a measurement apparatus of said quantum processor;
   **(c)** repeating (a)-(b) to collect a set of frequencies, said frequencies being associated with a measurement outcome and a quantum circuit;
   **(d)** computing a value of the model parameters by fitting the model to said set of frequencies.

2. The method according to claim 1, wherein the characterization gate sequence is a gate set tomography sequence, and wherein the method further comprises gauge optimization.

3. The method according to any of claims 1 to 2, wherein the neighboring gate sequence comprises initializing the environment qubits in a neighborhood-mixed state wherein the reduced density operator of each neighboring qubit is proportional to the unit-operator.

4. The method according to claim 3, wherein the neighborhood-mixed state is an even mixture $(|0\rangle^{\otimes n} + |1\rangle^{\otimes n})/2 \otimes |0\rangle^{\otimes(m-n)}$, wherein $m$ and $n$ are the numbers of environment and neighboring qubits, respectively.

5. The method according to any of claims 1 to 2, wherein the set of quantum circuits comprises of quantum circuit clusters, each consisting of two quantum circuits having a same characterization gate sequence and respectively a first neighboring gate sequence starting with an idle gate and a second neighboring sequence starting with a $\pi$ rotation, both first and second neighboring gate sequences being applied to each neighboring qubit, and wherein the method further comprises averaging frequencies collected on the two quantum circuits of each quantum circuit cluster.

6. The method according to any of the preceding claims, wherein the neighboring gate sequence is configured to reduce a patching error.

7. The method according to claim 6, wherein said patching error is estimated using perturbation expansion and the neighboring gate sequences are configured to cancel or at least reduce leading orders in said perturbation expansion up to the second order.

8. The method according to any of claims 6 to 7, wherein at least one of said quantum circuits includes a neighboring gate sequence comprising a dynamical decoupling sequence configured to reduce patching errors.

9. The method according to claim 8, wherein said dynamical decoupling sequence is coordinated with the characterization gate sequence of said at least one quantum circuit, so that at least some gates of said dynamical decoupling sequence are applied synchronously with at least some gates of the characterization gate sequence of said at least one quantum circuit, or at least some gates in said dynamical decoupling sequence are applied successively to at least some gates of the characterization gate sequence of said at least one quantum circuit.

10. The method according to any of the preceding claims, wherein at least one of said quantum circuits further comprises a context gate sequence applicable to one or more environment qubits outside the qubit patch, wherein context gates of said context gate sequence are applied synchronously to at least some characterization gates of the characterization gate sequence of said at least one quantum circuit.

11. A computer implemented method for characterizing a quantum processor, the method comprising successively applying the method of any of claims 1 to 10 to a plurality of patches of qubits of said quantum processor.

12. A computer program product, comprising a computer program, wherein the computer program, when executed by a computer, implements the method according to any of claims 1 to 11.

13. A system comprising a computer and a quantum processor, the computer having gate-level or pulse-level access to the quantum processor, the system being configured to perform the method according to any of claims 1 to 11.

14. A quantum circuit for use in characterizing implementation errors in a set of quantum logic operations of a quantum processor said set of quantum operations acting on a subset of qubits defining a qubit patch, wherein implementation errors involving the qubit patch are modeled by a model including a plurality of model parameters, said quantum circuit comprising:

- a characterization gate sequence applicable to said qubit patch configured to provide measurement outcomes sensitive to at least some of the model parameters; and
- a neighboring gate sequence applicable to at least some neighboring qubits interacting with the qubit patch, wherein said neighboring gate sequence is configured to reduce a sensitivity of measurement outcomes to implementation errors involving environment qubits outside the qubit patch.

15. The quantum circuit according to claim 14, wherein the neighboring gate sequence includes initializing the neighboring qubits in a neighborhood-mixed state, and wherein the neighboring gate sequence includes dynamical decoupling sequences configured to reduce patching errors.

**Fig. 1A**

110 $|+Z\rangle = \begin{pmatrix} 1 \\ 0 \end{pmatrix} \equiv |0\rangle$

100

160

$|+Y\rangle = \frac{1}{\sqrt{2}} \begin{pmatrix} 1 \\ i \end{pmatrix}$ 140

155

$|\psi\rangle \equiv \begin{pmatrix} \cos\frac{\theta}{2} \\ \sin\frac{\theta}{2} e^{i\phi} \end{pmatrix}$

170

150

$|+X\rangle = \frac{1}{\sqrt{2}} \begin{pmatrix} 1 \\ 1 \end{pmatrix}$ 130

120 $|-Z\rangle = \begin{pmatrix} 0 \\ 1 \end{pmatrix} \equiv |1\rangle$

**Fig. 1B**

180

185

$|\psi\rangle\langle\psi| = 0.5 \begin{pmatrix} 1 + \cos\theta & \sin\theta \, e^{-i\phi} \\ \sin\theta e^{i\phi} & 1 - \cos\theta \end{pmatrix}$

$|\psi\rangle\langle\psi| = 0.5\hat{I} +$
$0.5 \sin\theta \cos\phi \, \hat{\sigma}_x +$
$0.5 \sin\theta \sin\phi \, \hat{\sigma}_y +$
$0.5 \cos\theta \, \hat{\sigma}_z$

$\longrightarrow$

$|\psi\rangle\rangle \equiv 0.5 \begin{pmatrix} 1 \\ \sin\theta \cos\phi \\ \sin\theta \sin\phi \\ \cos\theta \end{pmatrix}$

190

195

**Fig. 2**

Z

Y

210

$|\psi\rangle$

$X_{\frac{\pi}{2}}|\psi\rangle$

X

$X_{\pi}|\psi\rangle$

220

230

**Fig. 3A**

Z

310

Y

340

320

330

**Fig. 3B**

**Fig. 3C**

**Fig. 3D**

Fig. 4

**Fig. 5A**

**Fig. 5B**

**Fig. 6**

Applying gate sequences **610**

| Characterization Sequence **613** | Neighboring Sequence **617** |

Measuring **620**

Repeating **630**

Fitting **640**

**Fig. 7A**

742 744 740 746

710

$F$ $g$ $g$ $g$ ... $g$ $F'$

750

720

$X$ or $I$ $DD$ $DD$ $DD$ ... $DD$

753 756

760

Fig. 7B

Fig. 7C

EP 4 322 070 A1

36

**Fig. 8**

- 811 — $|\rho\rangle\rangle$
- 812 — $F_{\mathbf{j}}$
- 813 — $g_{\mathbf{j}}^{q}$
- 814 — $F_{\mathbf{j}}'$
- 815 — $X_{\pi}/I$
- 816 — $DD$
- 817 — $I$
- 819 — $\otimes$
- 818
- 821 — $N_{i,\mathbf{j}} + 1$
- 822 — $N?$ — no / yes
- 824 — $f_{i,\mathbf{j}} = N_{i,\mathbf{j}}/N$
- 825 — $p_{i,j} \approx \tilde{f}_{i,\mathbf{j}} = \sum_{env} f_{i,\mathbf{j}}$
- 826 — $\mathbf{j}?$ — no / yes
- 828
- 831 — FIT $\theta(p)$
- 833 — $M^{-1}GM$
- 834 — $\delta\theta = J^{-1}\delta p$
- 835

Fig. 9

**Fig. 10**

1230

PROCESSING UNIT(S)
1110

MONITOR
1180

COMMUNICATION CONNECTION(S)
1170

OUTPUT DEVICE(S)
1160

INPUT DEVICE(S)
1150

STORAGE DEVICE(S)
1140

SOFTWARE FOR DISCLOSED TECHINIQUES
1129

RAM
1127

MEMORY
1220

ROM
1122

BIOS
1125

1100

REMOTE COMPUTER
1190

MEMORY/ STORAGE
1195

Fig. 11

**Fig. 12**

Europäisches
Patentamt
European
Patent Office
Office européen
des brevets

# EUROPEAN SEARCH REPORT

Application Number

EP 23 19 0045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERIK NIELSEN ET AL: "Probing quantum processor performance with pyGSTi", ARXIV.ORG, CORNELL UNIVERSITY LIBRARY, 201 OLIN LIBRARY CORNELL UNIVERSITY ITHACA, NY 14853, 28 February 2020 (2020-02-28), XP081610123, * the whole document * | 1-15 | INV. G06N10/20 G06N10/70 |
| X | Nielsen Erik: "Efficient Scalable Tomography of Many Qubit Quantum Processors", , 1 September 2020 (2020-09-01), XP093111281, DOI: 10.2172/1673168 Retrieved from the Internet: URL:https://www.osti.gov/biblio/1673168 [retrieved on 2023-12-12] * the whole document * | 1-15 | |
| A | TRIPATHI VINAY ET AL: "Suppression of Crosstalk in Superconducting Qubits Using Dynamical Decoupling", PHYSICAL REVIEW APPLIED, vol. 18, no. 2, 4 February 2022 (2022-02-04), XP093111349, US ISSN: 2331-7019, DOI: 10.1103/PhysRevApplied.18.024068 Retrieved from the Internet: URL:https://arxiv.org/pdf/2108.04530.pdf> * the whole document * | 1,3-6, 8-10, 12-15 | TECHNICAL FIELDS SEARCHED (IPC)  G06N |

The present search report has been drawn up for all claims

| Place of search | Date of completion of the search | Examiner |
|---|---|---|
| The Hague | 13 December 2023 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NIELSEN et al.** Gate Set Tomography. *Quantum,* 2021, vol. 5, 557
- **NIELSEN et al.** Probing quantum processor performance with pyGSTi. *Quantum Science and Technology,* 2020, vol. 5, 044002
- **KIMMEL et al.** Robust calibration of a universal single-qubit gate set via robust phase estimation. *Phys. Rev. A,* 2015, vol. 92, 06235

- **LANDA et al.** Experimental Bayesian estimation of quantum state preparation, measurement, and gate errors in multi-qubit devices. *Phys. Rev. Research,* 2022, vol. 4, 013199
- **ARUTE et al.** Observation of separated dynamics of charge and spin in the Fermi-Hubbard model. *arXiv:2010.07965,* 2020
- **SUNDARESAN et al.** Reducing Unitary and Spectator Errors in Cross Resonance with Optimized Rotary Echoes. *PRX Quantum,* 2020, vol. 1, 020318